(19) Europäisches Patentamt
European Patent Office
Office européen des brevets

(11) **EP 1 835 765 A1**

(12) **EUROPEAN PATENT APPLICATION**
published in accordance with Art. 158(3) EPC

(43) Date of publication:
**19.09.2007 Bulletin 2007/38**

(51) Int Cl.:
*H04N 9/07* (2006.01)    *H04N 5/335* (2006.01)

(21) Application number: **05766297.5**

(22) Date of filing: **15.07.2005**

(86) International application number:
**PCT/JP2005/013133**

(87) International publication number:
**WO 2006/064587 (22.06.2006 Gazette 2006/25)**

(84) Designated Contracting States:
**DE ES GB**

(30) Priority: **15.12.2004  JP 2004362188**

(71) Applicant: **Sharp Kabushiki Kaisha
Osaka-shi, Osaka 545-8522 (JP)**

(72) Inventor: **ITO, Ryutaro
Yaita-shi Tochigi 3292162 (JP)**

(74) Representative: **Müller, Frithjof E.
Müller Hoffmann & Partner
Patentanwälte
Innere Wiener Strasse 17
81667 München (DE)**

(54) **MULTI-SEGMENT READ CCD CORRECTING APPARATUS AND METHOD**

(57)    In a case of using a CCD or analog circuit of a poor quality where an error in hue or the like causes a problem, such an error in hue or the like may not be dealt with. In correcting pixel output values of a CCD, there are prepared beforehand a plurality of correction approximate straight-line group information or a set of correction approximate straight-line group information and a plurality of error correction approximate straight-line group information, and the most suitable one of them is dynamically selected. Alternatively, the gain is dynamically decided by use of a ratio-based correction from a plurality of candidate correction approximate straight-line group information (error correction approximate straight-line group information). Additionally, the ratio of color components (carrier components) is used to select the correction approximate straight-line group information (error correction approximate straight-line group information) and to decide the ratio of the correction.

Fig 1

EP 1 835 765 A1

**Description**

**BACKGROUND OF THE INVENTION**

**Field of the Invention**

The present invention relates to a correcting apparatus and method for multi-segment reading CCD

**Description of the Related Art**

In recent years, CCDs used for cameras and video cameras have been provided with a large number of pixels, so that it is necessary to read the large number of pixels within a specified time. Therefore, as a high-speed reading method for a large number of pixels of CCD, a multi-segment reading method, in which all pixels of a CCD are segmented into a plurality of areas, and pixels in the segmented areas are concurrently read, has been used. In this method, a receiving unit of CCD is segmented into a plurality of blocks, and a horizontal transferring unit is also segmented, and transfers charges corresponding to each pixel. However, in this CCD, which is segmented into a plurality of blocks and outputs charge, signal paths between the blocks are different, so that a difference of pixel output values occurs between the blocks when the segmented blocks are reconstructed into one screen. This difference mainly occurs due to the difference of physical properties between circuits. The difference is a value unique to each CCD. In addition, the difference between the segmented blocks is proportionate to the amount of light received by the light-receiving unit. Therefore, in the method disclosed in the cited document (Jpn. unexamined patent publication No. 2002-320142), by correcting gain in an amplification unit, which amplifies the pixel output values of each block, the difference of pixel output values occurring between blocks is corrected.

However, in the above method disclosed in the cited document (Jpn. unexamined patent publication No. 2002-320142), by means of one correction approximate straight-line group information, which is common to all pixels, the difference of pixel output values occurring between blocks is corrected according to an amount of received light of each pixel. Therefore, in the case of using a CCD of high quality or an analog circuit of high quality, in which problems in hue etc. are hardly observed, the above method is efficient enough, but in the case of using a CCD of lower quality or an analog circuit of lower quality, in which problems in hue etc. are observed, the above method is not efficient enough to cope with the problems in hue etc. The reason for this is that each pixel of CCD has a correction property unique to the pixel type.

**SUMMARY OF THE INVENTION**

In order to solve the above deficiencies, according to the present invention, in correcting pixel output values of a CCD, there are prepared beforehand a plurality of correction approximate straight-line group information or a set of correction approximate straight-line group information and a plurality of error correction approximate straight-line group information, and the most suitable one is dynamically selected. Alternatively, the gain is dynamically determined by use of a ratio-based correction from a plurality of candidate correction approximate straight-line group information (error correction approximate straight-line group information). In addition, the ratio of color components (carrier components) is used to select the correction approximate straight-line group information (error correction approximate straight-line group information) and to determine the ratio of the correction. The reason for this is that right-and-left difference due to a property of CCD or to fluctuations of analog circuit is proportional to the ratio of the carrier components, as shown by experiments.

The first aspect of the present invention is a correcting apparatus for multi-segment CCD, comprising, a first storing unit for correction approximate straight-line group information, which stores a plurality of correction approximate straight-line group information for correcting output difference between segment reading blocks of a multi-segment CCD, an acquiring unit for pixel output value, which acquires a pixel output value of the multi-segment CCD, a first selecting unit, which selects two or more sets of correction approximate straight-line group information from a plurality of correction approximate straight-line group information stored by said first storing unit for correction approximate straight-line group information based on the pixel output value acquired by said acquiring unit for pixel output value, and a first correcting unit, which corrects said pixel output value by means of the two or more sets of correction approximate straight-line group information selected by said first selecting unit.

The second aspect of the present invention is a correcting apparatus for multi-segment CCD, comprising a second storing unit for correction approximate straight-line group information, which stores a plurality of correction approximate straight-line group information for correcting output difference between segment reading blocks of a multi-segment CCD, a storing unit for error correction approximate straight-line group information, which stores a plurality of correction approximate straight-line group information for correcting output difference between segment reading blocks of a multi-segment CCD, an acquiring unit for pixel output value, which acquires a pixel output value of the multi-segment CCD, a second selecting unit, which selects correction approximate straight-line group information from a plurality of correction approximate straight-line group information stored by said second storing unit for correction approximate straight-line group information based on the pixel output value acquired by said acquiring unit for pixel output value, and further selects error correction approximate straight-line group information stored by said storing unit for error correction approximate straight-line group information based on the pixel output value acquired by said acquiring unit for pixel output value, and a second correcting unit, which corrects said pixel output value by means of the correction approximate straight-line group information and the error correction approximate straight-line group information selected by said second selecting unit.

The third aspect of the present invention is the correcting apparatus for multi-segment CCD according to the first aspect, wherein said first selecting unit carries out said selection based on a ratio of pixel output value of a pixel, of which output is to be corrected, to pixel output value of a pixel, which is adjacent to the pixel.

The fourth aspect of the present invention is the correcting apparatus for multi-segment CCD according to the second aspect, wherein said second selecting unit carries out said selection based on a ratio of pixel output value of a pixel, of which output is to be corrected, to pixel output value of a pixel, which is adjacent to the pixel.

The fifth aspect of the present invention is the correcting apparatus for multi-segment CCD according to the first aspect, wherein said first correcting unit comprises first correcting means according to output ratio, which carries out said correction by using a ratio of pixel output value of a pixel, of which output is to be corrected, to pixel output value of a pixel, which is adjacent to the pixel.

The sixth aspect of the present invention is the correcting apparatus for multi-segment CCD according to the second aspect, wherein said second correcting unit comprises second correcting means according to output ratio, which carries out said correction by using a ratio of pixel output value of a pixel, of which output is to be corrected, to pixel output value of a pixel, which is adjacent to the pixel.

The seventh aspect of the present invention is the correcting apparatus for multi-segment CCD according to the first aspect, wherein said first correcting unit comprises first correcting means according to output ratio, which carries out said correction by using a ratio of pixel output value of a pixel, of which output is to be corrected, to pixel output value of a pixel, which is adjacent to the pixel, comprising a partial bypass processing unit, which carries out said correction without by means of said first correcting means according to output ratio if the pixel output value acquired by said acquiring unit for pixel output value is less than or equal to a predetermined value.

The eighth aspect of the present invention is the correcting apparatus for multi-segment CCD according to the first aspect, comprising a storing unit for standard correction approximate straight-line group information, which stores one standard correction approximate straight-line group information, wherein if the pixel output value acquired by said acquiring unit for pixel output value is less than or equal to a predetermined value, the correction is carried out by means of the one standard correction approximate straight-line group information stored by the storing unit for standard correction approximate straight-line group information as a substitute for said two or more sets of correction approximate straight-line group information without by means of the first selecting unit.

The ninth aspect of the present invention is the correcting apparatus for multi-segment CCD according to the second aspect, wherein said second correcting unit comprises second correcting means according to output ratio, which carries out said correction by using a ratio of pixel output value of a pixel, of which the output is to be corrected, to pixel output value of a pixel, which is adjacent to the pixel, comprising a partial bypass processing unit, which carries out said correction without by means of said second correcting means according to output ratio if the pixel output value acquired by said acquiring unit for pixel output value is less than or equal to a predetermined value.

The tenth aspect of the present invention is the correcting apparatus for multi-segment CCD according to any one of the first, third, fifth, seventh, and eighth aspects, comprising a first gain attenuating unit, which is arranged subsequent to said first correcting unit.

The eleventh aspect of the present invention is the correcting apparatus for multi-segment CCD according to any one of the second, fourth, sixth, and ninth aspects, comprising a second gain attenuating unit, which is arranged subsequent to said second correcting unit.

The twelfth aspect of the present invention is the correcting apparatus for multi-segment CCD according to any one of the first, third, fifth, seventh, and eighth aspects, comprising a first gain amplifying unit, which is arranged precedential to the acquiring unit for pixel output value arranged precedential to said first correcting unit, and a first gain attenuating unit, which is arranged subsequent to said first correcting unit.

The thirteenth aspect of the present invention is the correcting apparatus for multi-segment CCD according to any one of the second, fourth, sixth, and ninth aspects, comprising a second gain amplifying unit, which is arranged precedential to the acquiring unit for pixel output value arranged precedential to said second correcting unit, and a second gain attenuating unit, which is arranged subsequent to said second correcting unit.

According to the correcting apparatus for multi-segment CCD of the present invention, it becomes possible to generate a plurality of correction approximate straight-line group information, to store them in a memory, and to determine correction value from them upon photographing, thereby enabling accurate correction of differences between the divided pixel output values. In addition, it becomes possible to generate correction approximate straight-line group information and error correction approximate straight-line group information, to store them in a memory, and to carry out addition or subtraction of errors corrected by means of the error correction approximate straight-line group information after correction by means of the correction approximate straight-line group information, thereby enabling reduction of memory amount etc.

**BRIEF DESCRIPTION OF THE DRAWINGS**

Fig. 1 is a conceptual diagram of a first embodiment;
Fig. 2 is a functional block diagram of the first embodiment;
Fig. 3 is a conceptual diagram of a 2-segment CCD of the first embodiment;
Fig. 4 is a diagram showing a generating method for correction approximate straight-line group information of the first embodiment;
Fig. 5 is a diagram showing a plurality of correction approximate straight-line group information of the first embodiment;
Fig. 6 is a diagram showing adjacent pixels of the first embodiment;
Fig. 7 is a diagram showing calculation of ratio as to the adjacent pixels of the first embodiment;
Fig. 8 is a diagram showing a first case of correction approximate straight-line group information of the first embodiment;
Fig. 9 is a flow chart of the first embodiment;
Fig. 10 is a conceptual diagram of a second embodiment;
Fig. 11 is a functional block diagram of the second embodiment;
Fig. 12 is a diagram showing a first case of correction approximate straight-line group information of the second embodiment;
Fig. 13 is a diagram showing error correction approximate straight-line group information of the second embodiment;
Fig. 14 is a diagram showing a first correcting method of the second embodiment;
Fig. 15 is a diagram showing a second correcting method of the second embodiment;
Fig. 16 is a flow chart of the second embodiment;
Fig. 17 is a functional block diagram of a fifth embodiment;
Fig. 18 is a block diagram of a first example of the fifth embodiment;
Fig. 19 is a functional block diagram of a first case of a gain correcting circuit of the first example of the fifth embodiment;
Fig. 20 is a diagram showing a first case of pixel of a complementary color filter of the first example of the fifth embodiment;
Fig. 21 is a diagram showing a second case of pixel of a complementary color filter of the first example of the fifth embodiment;
Fig. 22 is a diagram showing a correcting method of a first example of the fifth embodiment;
Fig. 23 is a functional block diagram of a second case of a gain correcting circuit of the first example of the fifth embodiment;
Fig. 24 is a diagram showing a non-linear converting circuit of the first example of the fifth embodiment;
Fig. 25 is a functional block diagram of a sixth embodiment;
Fig. 26 is a functional block diagram of a first case of a gain correcting circuit of a second example of the sixth embodiment;
Fig. 27 is a diagram showing a correcting method of a second example of the sixth embodiment;
Fig. 28 is a functional block diagram of a second case of a gain correcting circuit of the second example of the sixth embodiment;
Fig. 29 is a functional block diagram of a seventh embodiment;
Fig. 30 is a functional block diagram of a gain correcting circuit of a third example of the seventh embodiment;
Fig. 31 is a flow chart of the seventh embodiment;
Fig. 32 is a functional block diagram of an eighth embodiment;
Fig. 33 is a flow chart of the eighth embodiment;
Fig. 34 is a functional block diagram of a ninth embodiment;
Fig. 35 is a functional block diagram of a gain correcting circuit of a fourth example of the ninth embodiment;
Fig. 36 is a flow chart of the ninth embodiment;
Fig. 37 is a functional block diagram of a tenth embodiment;
Fig. 38 is a functional block diagram of a fifth example of the tenth embodiment;

Fig. 39 is a flow chart of the tenth embodiment;

Fig. 40 is a functional block diagram of an eleventh embodiment;

Fig. 41 is a flow chart of the eleventh embodiment;

Fig. 42 is a functional block diagram of a sixth example of the tenth embodiment;

Fig. 43 is a first conceptual diagram of the correction approximate straight-line group information of the first embodiment;

Fig. 44 is a second conceptual diagram of the correction approximate straight-line group information of the first embodiment;

Fig. 45 is a third conceptual diagram of the correction approximate straight-line group information of the first embodiment;

Fig. 46 is a fourth conceptual diagram of the correction approximate straight-line group information of the first embodiment;

Fig. 47 is a diagram showing a second case of correction approximate straight-line group information of the first embodiment;

Fig. 48 is a diagram showing a generating method for error correction approximate straight-line group information of the second embodiment;

Fig. 49 is a diagram showing a specific pixel arrangement used for correction of the first embodiment; and

Fig. 50 is a conceptual diagram of a CCD of the first embodiment.

Description of Reference Numerals

100 Correcting apparatus for multi-segment CCD
101 First storing unit for correction approximate straight-line group information
102 Acquiring unit for pixel output value
103 First selecting unit
104 First correcting unit

## DETAILED DESCRIPTION OF THE INVENTION

Embodiments of the present invention will be described hereinbelow with reference to the drawings. The present invention is not to be limited to the above embodiments and able to be embodied in various forms without departing from the scope thereof.

### «First embodiment»

Hereinbelow, the first embodiment will be described.

<Concept of first embodiment>

Hereinbelow, a concept of the first embodiment will be described. A correcting apparatus for multi-segment CCD of the first embodiment enables a correction unique to each pixel, for example, a correction according to correction rules with respect to each color.

(Detailed concept of correcting apparatus for multi-segment CCD)

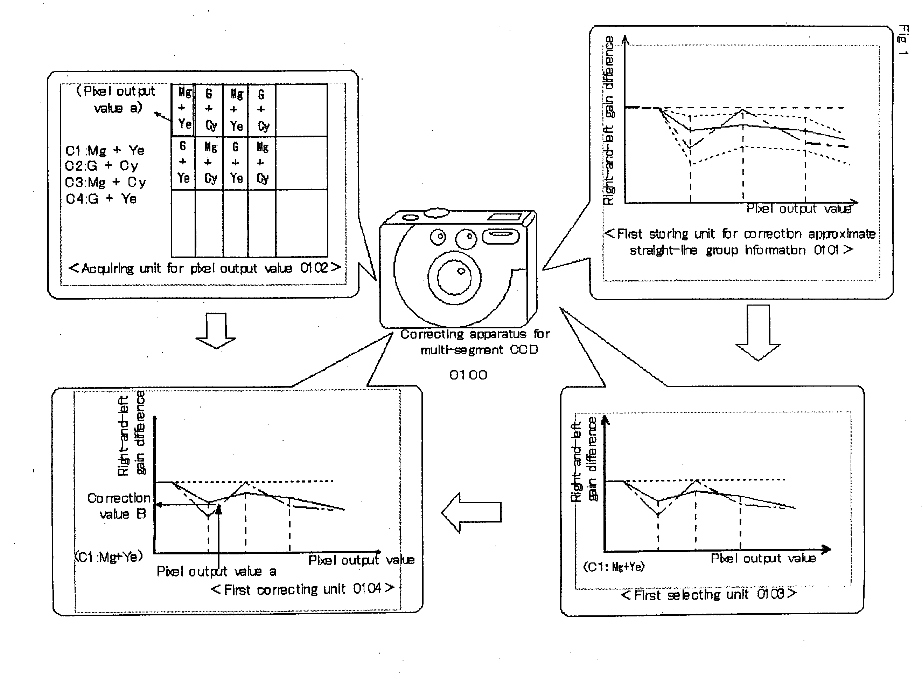

Fig. 1 is a conceptual diagram of a first embodiment. In Fig. 1, a CCD provided with a complementary color filter (after-mentioned) will be exemplified. In the case of the complementary color filter, in shooting moving images, as to a particular line, pixel output values of C1: Mg + Ye and pixel output value of C2: G + Cy are alternatively outputted, and as to the subsequent line, pixel output values of C4: G + Ye and pixel output value of C3: Mg + Cy are alternatively outputted.

In a correcting apparatus for multi-segment CCD of the first embodiment 0100, a first storing unit for correction approximate straight-line group information 0101 preliminarily stores a plurality of correction approximate straight-line group information (in Fig. 1, four sets of correction approximate straight-line group information generated by capturing objects of white, red, green, and blue) in a memory unit therein. Here, if a user of the correcting apparatus for multi-segment CCD takes moving images, an acquiring unit for pixel output value 0102 acquires pixel output values of all pixels. Here, a pixel output value of a specific pixel (in Fig. 1, a pixel output value of a pixel (C1) in the left corner) is considered. A first selecting unit 0103 selects two or more sets of correction approximate straight-line group information (e.g., as to white and red, or as to white and green) from a plurality of correction approximate straight-line group information stored by the first storing unit for correction approximate straight-line group information based on the pixel output value acquired by the acquiring unit for pixel output value. Subsequently, a first correcting unit 0104 calculates a correction value B from the pixel output value a, and carries out correction by means of the two or more sets of correction approximate straight-line group information (e.g., as to white and red, or as to white and green) selected by the first selecting unit. Note that, in the case of the complementary color filter, similar to the case of C1, the correction approximate straight-line group information of C2, C3, and C4 are generated (Fig. 1 indicates two sets of correction approximate straight-line group information for the pixel C1).

(Concept of the correction approximate straight-line group information)

Hereinbelow, a concept of the correction approximate straight-line group information will be described.

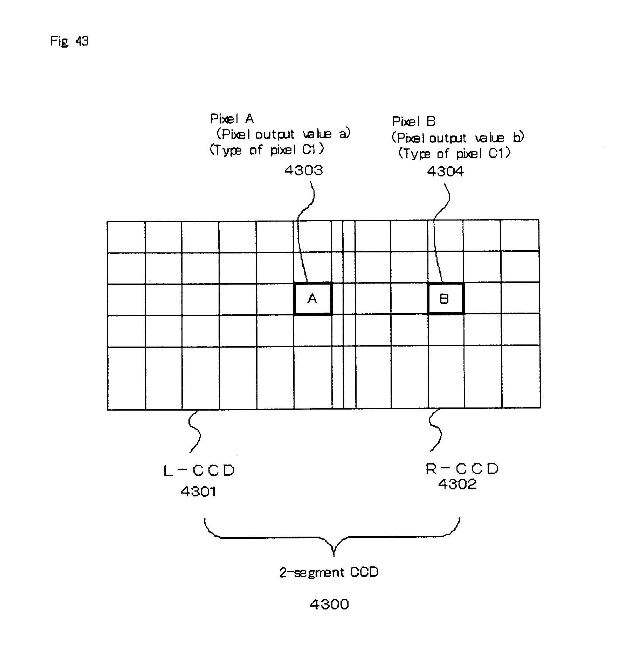

Fig. 43, 44, 45, and 46 are conceptual diagrams of the correction approximate straight-line group information, and explain the case of 2-segment CCD segmented into right and left portions.

Fig. 43 is a diagram showing a pixel, which is a target for using correction approximate straight-line group information, and is used for generating correction approximate straight-line group information. A 2-segment CCD 4300 is configured by a left-block L-CCD 4301 and a right-block R-CCD 4302. The L-CCD comprises a pixel A 4303 and the R-CCD comprises a pixel B 4304. Here, it is assumed that the pixel A 4303 and the pixel B 4304 are the same type of pixel (e.g., the complementary color filter C: Mg + Ye), and a pixel output value a corresponds to the pixel A, and a pixel output value b corresponds to the pixel B. Further, the pixels A and B are pixels in the same image of a uniform color. Considering a property of CCD, there is a gain difference between the pixel output values a and b, and this gain difference is unique to each CCD. In order to compensate the gain, K is added to the pixel output value a. Therefore, a corrected pixel output value d of the pixel A is expressed by a formula $d = a + K$, and by plotting K according to an amount of received light on the pixel A, correction approximate straight-line group information is acquired.

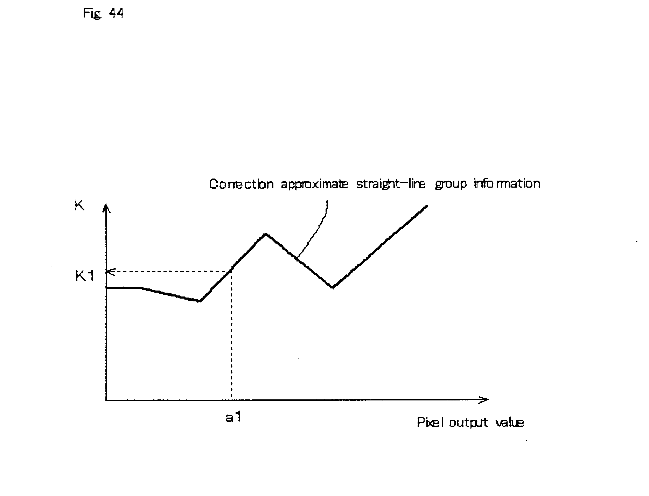

Fig. 44 is a conceptual diagram of the above generated correction approximate straight-line group information. In cases where a pixel output value a1 of the pixel A in the left block is corrected based on an input value, in Fig. 44, K1, which corresponds to K, is added to the pixel output value a1 (a corrected pixel output value d1 of the pixel A is expressed by a formula $d1 = a1 + K1$), so that the same pixel output value as the pixel output value bl of the pixel B in the right block is outputted to a display.

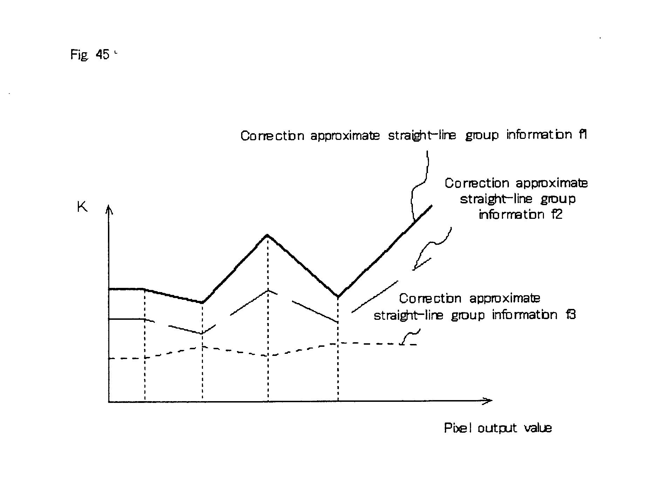

Fig. 45 is a conceptual diagram of the correction approximate straight-line group information. Fig. 45 indicates three sets of correction approximate straight-line group information (fl, f2, and f3). By means of the three sets of correction approximate straight-line group information, it becomes possible to carry out accurate correction according to pixel output values of respective pixels.

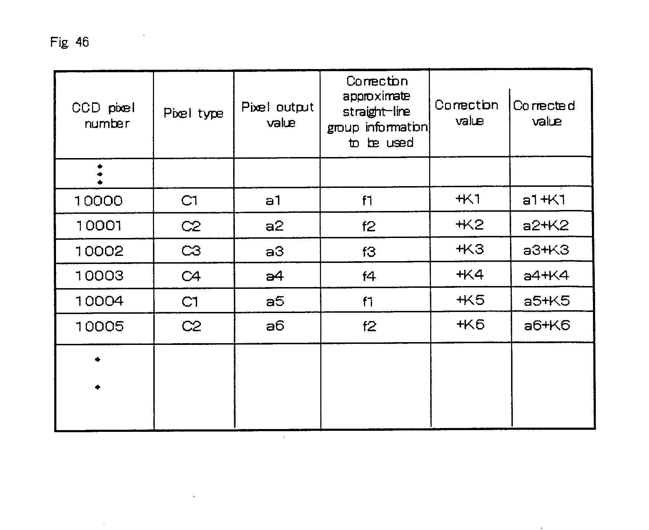

Fig. 46 is a diagram showing the relation between CCD pixels and corrected values in the case of carrying out correction by means of correction approximate straight-line group information. A set includes pixel number in CCD, pixel type, pixel output value, correction approximate straight-line group information to be used, value for correction, and corrected value. For example, as to a pixel, of which a pixel number in CCD is 10000, its pixel output value is a1 when its pixel type is C1, and one correction approximate straight-line group information acquired according to its pixel type is fl. Further, a value for correction acquired by means of the one correction approximate straight-line group information is + K1, and a corrected pixel output value is a1 + K1.

<Specifying of components>

Hereinbelow, components of the first embodiment will be described.

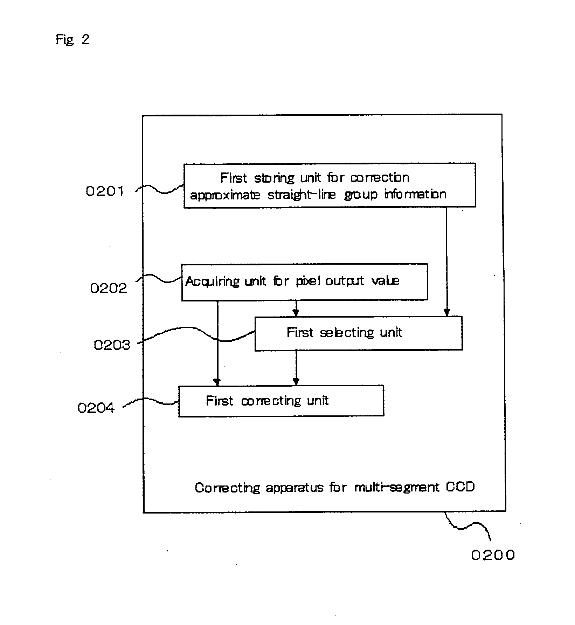

Fig. 2 is a functional block diagram of the first embodiment. A correcting apparatus for multi-segment CCD 0200 of the first embodiment comprises a first storing unit for correction approximate straight-line group information 0201, an acquiring unit for pixel output value 0202, a first selecting unit 0203, and a first correcting unit 0204.

(CCD)

Prior to describing the components, CCD (Charge Coupled Device) will be described.

A 'CCD' is an imaging sensor, which converts light into charge by photoelectric effect.

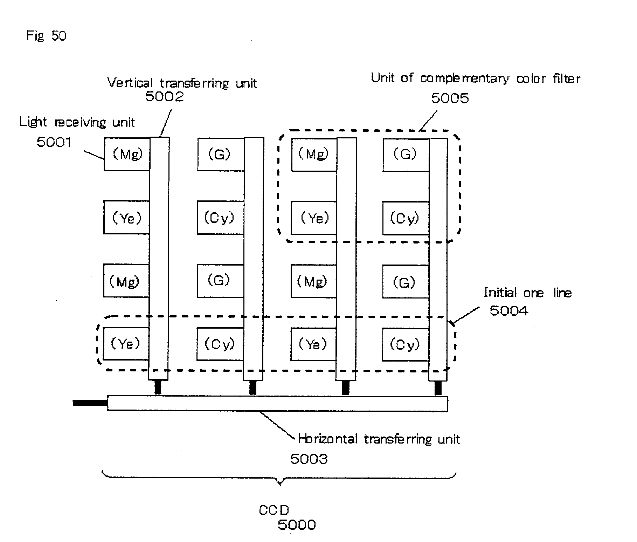

Fig. 50 is a conceptual diagram of a general CCD. A CCD 5000 comprises a receiving unit 5001, a vertical transferring unit 5002, and a horizontal transferring unit 5003. In CCD, photodiodes (light-receiving element), which is for sensing brightness (signal intensity of light), are regularly arranged in a matrix in a plane. The CCD is classified into frame transfer-type CCD, interline transfer-type CCD, full frame transfer-type CCD, or frame interline transfer-type CCD etc. The light-receiving unit, comprising a plurality of light-receiving elements, receives light from an object, and converts the light into charge by photoelectric effect. The charge, which has been converted, is transferred to the vertical transferring unit. Charges in an initial one line 5004 (a portion surrounded by perforated lines in Fig. 50, and also known as line) of the charges transferred to the vertical transferring unit are transferred to the horizontal transferring unit. The horizontal transferring unit outputs the charges in the initial one line to a signal amplification circuit etc. as charges corresponding to one scanning line. When the charges are transferred from the horizontal transferring unit to the signal amplification circuit etc., charges in the subsequent one line are transferred from the vertical transferring unit to the horizontal transferring unit. The above processes are repeated for all lines of the vertical transferring unit. Thus, the CCD completes transfer of all charges within a predetermined period of time, and outputs charges in one frame (or one field). For example, in cases where CCD is used for an imaging sensor of recording apparatus for recording a moving image such as a video camera, transfer of charges in one frame is completed within 1/30 sec. The charges outputted from the CCD are amplified up to a predetermined pixel output value by the signal amplification circuit, and necessary image processing is carried out by circuits.

Here, the light-receiving element can store only information regarding intensity of light, so that information regarding color cannot be acquired (i.e., it can store only the amount of charges, which are described as an pixel output value in this specification (after-mentioned)). Therefore, in order to express a color, the CCD is configured to photodegrade light by means of a primary color filter or a supplementary color filter, and to generate color information by means of a combination of color information of a plurality of pixels (e.g., in a portion 5005 surrounded by perforated lines in Fig. 50, the complementary color filter expresses one color by a plurality of light-receiving elements). Here, the term 'primary color filter' means filters of R (Red), G (Green), and B (Blue), which are the three primary colors of light. For example, as described above, the light-receiving element of the CCD is unable to identify color, so that the RGB filter is equipped with a digital camera in order to acquire color information. Further, as to the arrangement pattern of color filters with respect to each pixel of the CCD, even in the case of a normal RGB primary color filter, the color filters are arranged not in order of RGB, and there are usually twice as many Green filters as other color filters because the human eye is most sensitive to green. Vividness is a characteristic of the primary color filter. However, in the case of a low-resolution CCD, when enlarging a photographed image, the above arrangement pattern can appear as noise. Further, the primary color filter has low light transparency, thereby having a tendency of low sensitivity. Subsequently, the term 'complementary color filter' includes filter of G (Green) in addition to filters of Cy (Cyan, Green and blue), Mg (Magenta, Blue and Red), and Ye (Yellow, Green and Red), which are complementary colors of the three primary colors of light (refer to a portion 5005 surrounded by perforated lines in Fig. 50). In the case of using the complementary color filter, calculation of the pixel output values of Cyan, Magenta, and Yellow is carried out, thereby generating the pixel output values of Red, Green and Blue. In the case of using complementary color filters, RGB is reproduced after the calculation, thereby causing loss in color reproduction, so that vividness as in the primary color filter cannot be reproduced, and its color tone is poor. Further, in the calculation process, color tone becomes narrow and unnatural. Meanwhile, the complementary color filter has high light transparency, and the calculation is carried out by adding green, which is a color including the most brightness information for the human eye, so that the complementary color filter generally has high sensitivity. In addition, as to the complementary color filter, sharpness tends to be calculated in generating an image, so that the complementary color filter generally has high resolution. For example, an image photographed by a digital camera equipped with the complementary color filter CCD generally has high sharpness and natural color tone.

(First storing unit for correction approximate straight-line group information)

The 'first storing unit for correction approximate straight-line group information' stores a plurality of correction approximate straight-line group information for correcting output differences between segment reading blocks of a multi-segment CCD. Here, the term 'segment reading' means that the light-receiving unit of CCD is segmented into a plurality of blocks, and corresponding to this, the vertical transferring unit and horizontal transferring unit are also segmented into a plurality of blocks, and pixel output values (after-mentioned) are outputted. Note that in cases where the division is only in the vertical direction, it is unnecessary to segment the vertical transferring unit, and in cases where the division is only in the horizontal direction, it is unnecessary to segment the horizontal transferring unit. Examples of the division include 2-segment, 3-segment, and 4-segment. The purpose of the segmentation is to transfer the pixel output values in one frame (or in one field) within a predetermined period of time even when the number of pixels of CCD is large. For example, in the case of 2-segment CCD, the light-receiving unit is segmented into 2 blocks, right and left blocks, and corresponding to this, the vertical transferring unit and the horizontal transferring unit are also segmented into 2 blocks, right and left blocks, respectively, so that it becomes possible to segment the pixel output values in one line into pixel output values of the left-block and of the right-block, and to transfer them. This CCD having the 2-block horizontal transferring unit is able to complete transfer within a half period of time in comparison with a CCD, which has the same number of pixels and 1-block horizontal transferring unit (a CCD, of which light-receiving unit and horizontal transferring unit are not segmented into 2 portions).

Further, the term 'output difference between the segment reading blocks' means level differences of pixel output values occurring between a plurality of blocks. These level differences mainly occur due to different signal paths for outputting the pixel output value. For this reason, in cases where correction is not carried out, when reproducing and displaying the pixel output values, brightness is different between a plurality of blocks in one image, thereby deteriorating image quality. Therefore, in the present invention, by correcting the pixel output values of a plurality of blocks, differences of the pixel output values occurring between a plurality of blocks are corrected.

Subsequently, the correction approximate straight-line group information of the present invention will be described. The 'correction approximate straight-line group information' means information used for approximately correcting differences of pixel output values between a plurality of blocks by means of straight-line group. For example, a vertical axis indicates pixel output values of respective pixels, and a horizontal axis indicates gain differences of pixel output values between standard block and other block, so that the correction approximate straight-line group information is graphically indicated. Note that the vertical axis may indicate not only the gain difference but also ratio of pixel output values between the standard block to the other blocks or by multiplication of their respective values.

(Generating method for correction approximate straight-line group information)

Hereinbelow, a generating method for correction approximate straight-line group information will be described. For example, a white object is preliminarily captured, and gain differences of pixel output values between standard block and other blocks are calculated by changing pixel output values, so that the correction approximate straight-line group information of white is generated. This process is repeated as to a plurality of colors (e.g., red, green, and blue), so that a plurality of correction approximate straight-line group information is generated. The generated correction approximate straight-line group information is stored in a memory of the first storing unit for correction approximate straight-line group information. The correction approximate straight-line group information is generated with respect to each basic pixel type. For example, in the case of using the primary color filter, all pixels are configured by repetition of three colors, R (Red), G (Green) and B (Blue), so that a plurality of correction approximate straight-line group information is generated as to the three colors, R, G and B, or as to a combination of R, G, and B. Further, in the case of using the complementary color filter, all pixels are configured by repetition of four colors, Cy (Cyan, Green and blue), Mg (Magenta, Blue and Red), Ye (Yellow, Green and Red) and G (Green), so that a plurality of correction approximate straight-line group information is generated as to the four colors, Cy, Mg, Ye and G, or as to a combination of Cy, Mg, Ye and G. Note that correction approximate straight-line group information may be generated with respect to each digital image recording apparatus provided with the correcting apparatus for multi-segment reading CCD (e.g., a digital camera or a movie apparatus). Alternatively, correction approximate straight-line group information, which is common to all digital image recording apparatuses provided with the correcting apparatus for multi-segment reading CCD, may be generated. However, each digital image recording apparatus provided with the correcting apparatus for multi-segment reading CCD has an individual difference in property, it is preferable that the correction approximate straight-line group information is generated with respect to each digital image recording apparatus provided with the correcting apparatus for multi-segment reading CCD. Further, although it is preferable that correction approximate straight-line group information is generated by a manufacturer before shipment, it is possible for a user to carry out adjustment after shipment.

Hereinbelow, as a simple example, the correction approximate straight-line group information, in cases where all pixels of the CCD of the correcting apparatus for multi-segment reading CCD are segmented into right and left blocks, will be described. Note that in this specification, unless otherwise noted, a capital alphanumeric character is used for expressing a specific pixel, and a lower-case alphanumeric character corresponding to the capital alphanumeric character is used for expressing a pixel output value corresponding to the specific pixel. Further, in this specification, pixel type is expressed in brackets. For example, a 'pixel A' means that a pixel, of which position is to be specified, is A, and 'a' means that a pixel output value of the pixel A is a, or a pixel output value of the pixel type A is a. Further, a 'pixel (A1)' means that a pixel type is A1. Further, a 'pixel A (A1)' means that a pixel type of the pixel A is A1.

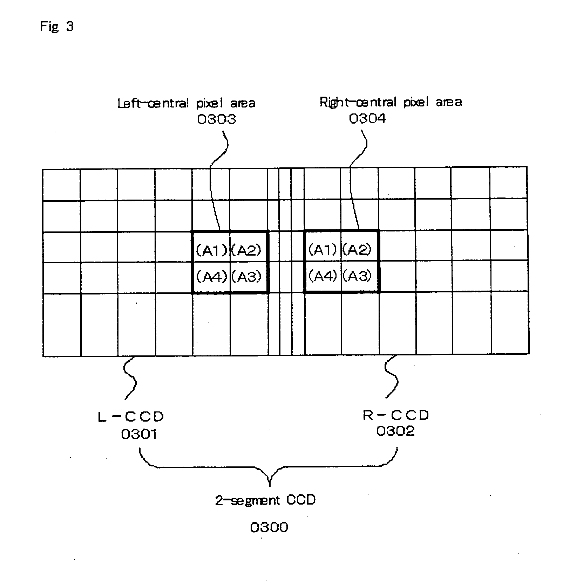

Fig. 3 is a schematic diagram of 2-segment CCD of the first embodiment. A 2-segment CCD (0300) is segmented into a L-CCD (0301) and a R-CCD (0302). For example, it is assumed that all pixels of 2-segment CCD are configured by four types of pixels (A1), (A2), (A3), and (A4). Therefore, the four types of pixels (A1), (A2), (A3), and (A4) express one color. Here, the central pixel area of the 2-segment CCD is segmented into a left-central pixel area 0303, and a right-central pixel area 0304. The left-central pixel area 0303 and the right-central pixel area 0304 comprise four types of pixels (A1), (A2), (A3), and (A4), respectively. In generating correction approximate straight-line group information, at the outset, pixel output values in the left-central pixel area and in the right-central pixel area are measured with respect to each pixel type. For example, average values of the pixel output values of the pixel (A1) in the left-central pixel area and of the pixel output values of the pixel (A1) in the right-central pixel area are calculated, and the difference between them is calculated. Subsequently, irradiation intensity of illuminant color for correction to be irradiated on the pixel (A1) is changed, and the average values of the pixel output values are plotted on a horizontal axis, and gain differences of the pixel output values between the right and left blocks are plotted on a vertical axis, so that the correction approximate straight-line group information of the pixel (A1) is generated. The above processes are repeated as to a plurality of colors to be used for correction (illuminant colors for correction) of an entire object, so that a plurality of correction approximate straight-line group information is generated. Further, the above processes are carried out with respect to each type of pixel (A2), (A3), and (A4), so that a plurality of correction approximate straight-line group information as to each type of pixel (A2), (A3), and (A4) is generated. Note that the correction approximate straight-line group information may be acquired with respect to each pixel. Alternatively, correction value of the correction approximate straight-line group information may be acquired with respect to each pixel.

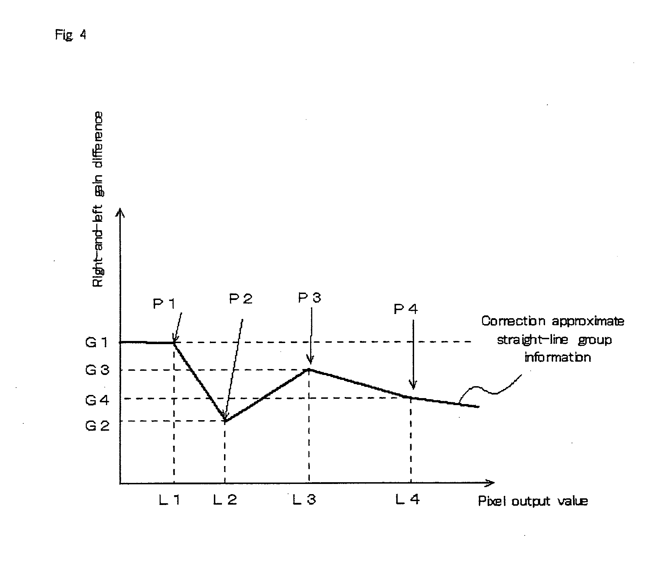

Fig. 4 is a diagram showing a generating method for correction approximate straight-line group information (in the case of 2-segment CCD). The horizontal axis indicates pixel output value, and the vertical axis indicates gain difference of the pixel output values between the right and left pixels. At the outset, pixel output value of a specific color to be used for correction (illuminant color for correction) from an object is increased from L1 to L4. As the pixel output value varies, the right-and-left gain difference varies from G1 to G4. An intersection of L1 with G1 is P1 (the same is applied to P2, P3, and P4). The P1, P2, P3, and P4 are connected by a straight line, thereby generating correction approximate straight-line group information. The correction approximate straight-line group information is stored in a memory. As to the other colors to be used for correction (illuminant colors for correction), the correction approximate straight-line group information is generated.

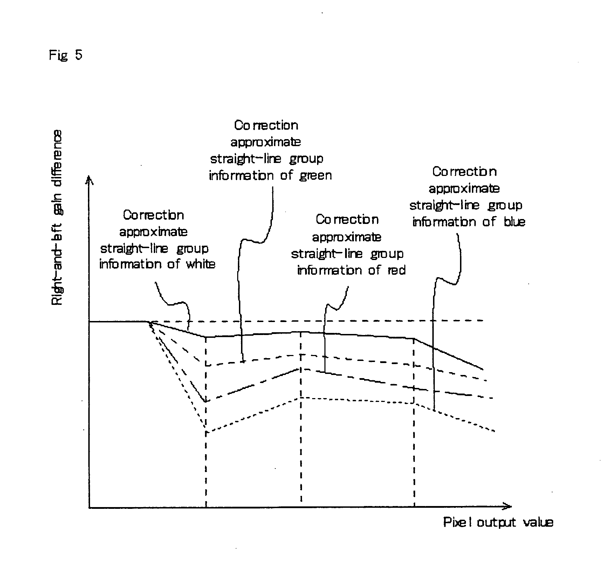

Fig. 5 is a diagram showing correction approximate straight-line group information as to the pixel (A1). The pixel output value as to the pixel (A1) is corrected by means of correction approximate straight-line group information as to a plurality of colors (white, red, green, and blue). Similarly, as to the other types of pixels, (A2), (A3), and (A4), a plurality of correction approximate straight-line group information are generated.

Note that in the present invention, sizes of the left-central pixel area and the right-central pixel area can be set arbitrarily. Further, in the present invention, a pixel area used for generating the correction approximate straight-line group information is not limited to a central portion. Therefore, the pixel area may be separately arranged in right and left portions. Further, although the pixel area used for generating the correction approximate straight-line group information may be the smallest number of pixel areas necessary for generating the correction approximate straight-line group information (e.g., in the case of using four types of pixels, (A1), (A2), (A3), and (A4), the four types of pixels in respective right and left portions are used), it is preferable to use a plurality of pixel areas for one type of pixel.

The plurality of correction approximate straight-line group information stored in the first storing unit for correction approximate straight-line group information is, for example, outputted to the first selecting unit.

(Acquiring unit for pixel output value)

The 'acquiring unit for pixel output value' acquires a pixel output value of the multi-segment CCD. The term 'pixel output value' means a signal value to be outputted to a pixel configuring a displaying apparatus for displaying an image. The pixel output value may be a value of unit of pixel (light-receiving element) configuring the multi-segment reading CCD, or may be a value acquired by calculation (e.g., addition or subtraction etc.) of the pixel output values of a plurality of pixels (light-receiving elements). For example, correction process may be carried out after converting the pixel output values of four types of pixels, Cy, Mg, Ye and G, which has been used for the complementary color filter, to the pixel output values of C1: Mg + Ye, C2: G + Cy, C3: Mg + Cy, and C4: G + Ye. Alternatively, the correction process may be carried out after converting the pixel output values of the four types of pixels, Cy, Mg, Ye and G, which have been used for the complementary color filter, into the pixel output values of three types of pixels, R, G and B, which are the primary colors. The pixel output values are, for example, outputted to a first selecting unit or to a first correcting unit.

(First selecting unit)

The 'first selecting unit' selects two or more sets of correction approximate straight-line group information from a plurality of correction approximate straight-line group information stored by the first storing unit for correction approximate straight-line group information based on the pixel output value acquired by the acquiring unit for pixel output value. Here, the term 'based on the pixel output values' means that the pixel output value is not limited to value of the pixel (a target pixel), and may include value acquired by a predetermined calculation on the pixel output value of the above pixel itself and of adjacent pixels. Further, in cases where a certain pixel A is targeted, the 'adjacent pixels' includes pixels next to A, several pixels away from A in a horizontal direction, several pixels away from A in a vertical direction, or several pixels away from A in a diagonal direction. Further, examples of the 'predetermined calculation' include ratio of the pixel output values of the pixel A itself to the adjacent pixel, and ratio of sum or difference of the pixel output values of the pixel A itself to the adjacent pixel. For example, assuming that the pixel to be targeted is A (the pixel output value is a), and the adjacent pixel is B (the pixel output value is b), examples of the predetermined calculation include a/b, b/a, (a+b)/(a-b), and (a-b)/(a+b).

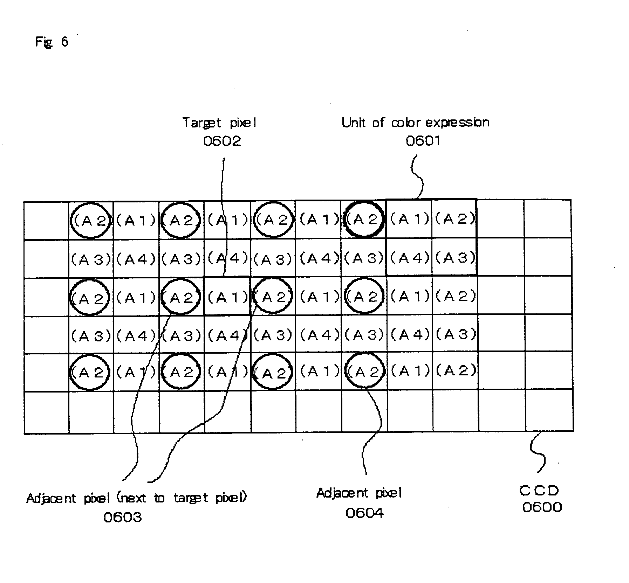

Fig. 6 is a conceptual diagram showing adjacent pixels. A CCD (0600) is configured by four types of pixels (A1), (A2), (A3), and (A4). The four types of pixels (A1), (A2), (A3), and (A4) form a unit for expressing a color 0601, and these four types of pixels are repeatedly arranged, thereby configuring all pixels. Here, it is assumed that the ratio of the output values a1 to a2, a1/a2, is used. For example, if the pixel to be targeted is a target pixel 0602, the adjacent pixels are circled pixels (A2) in Fig. 6. Adjacent pixels 0603 (A2) are next to the target pixel 0602 (A1). The other adjacent pixels, for example, an adjacent pixel 0604 (A2) is not next to the target pixel 0602 (A1). In cases where the ratio of the output values a3 to a4, a3/a4, is used as a predetermined calculation, the above concept of adjacent pixel is similarly applied.

Note that the predetermined calculation may include not only a calculation on a pixel output value of one pixel but also calculations on pixel output values of several pixels. Hereinbelow, the description will be made with reference to drawings.

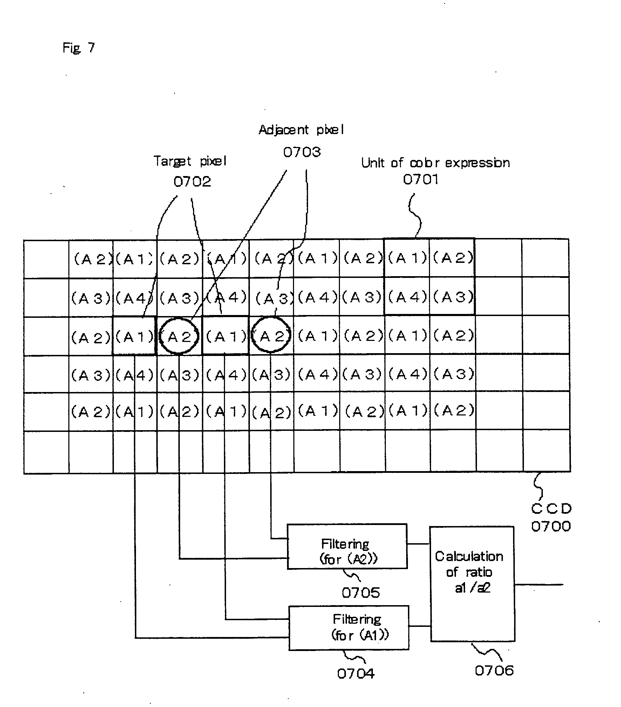

Fig. 7 is a diagram showing the case where pixel output values of several pixels are processed by filtering as the predetermined calculation. Pixels of a CCD 0700 are configured by four types of pixels (A1), (A2), (A3), and (A4). The four types of pixels (A1), (A2), (A3), and (A4) form a unit 0701 for expressing a color, and these four types of pixels are repeatedly arranged, thereby configuring all pixels. Here, it is assumed that the ratio of the output values a1 to a2, a1/a2, is used. As shown in Fig. 7, two target pixels 0702 (A1) and two adjacent pixels 0703 (A2) are processed by a filtering for (A1) 0704 and by a filtering for (A2) 0705, an according to a result of the filtering, the ratio a1/a2 is calculated.

Subsequently, a selecting method for two or more sets of correction approximate straight-line group information from a plurality of correction approximate straight-line group information based on the pixel output value will be described. As described above, for example, the ratio of color components (carrier components) is used for selecting correction approximate straight-line group information. For example, in the case of using four types of pixels (A1), (A2), (A3), and (A4), the above-mentioned ratios a1/a2 and a3/a4 are used. The reason for this is that the difference between blocks due to a property of CCD of correcting apparatus for multi-segment CCD or to fluctuations of analog circuit is approximately proportional to the ratio of the carrier components, as shown by experiments. According to the degree of these ratios a1/a2 and a3/a4, the most suitable one of a plurality of correction approximate straight-line group information is dynamically selected. For example, it is assumed that as to the pixel (A1), correction approximate straight-line group information of a plurality of colors (white, red, green, and blue) are generated. In this case, if the ratio a1/a2 is more than or equal to 1, correction approximate straight-line group information of red is selected, and if it is less than or equal to 1, correction approximate straight-line group information of green is selected. Here, the term 'selects two or more sets of correction approximate straight-line group information' may include not only selecting two or more sets of correction approximate straight-line group information from a plurality of correction approximate straight-line group information in an arbitrary manner, but also selection in which one set is preliminarily determined, and the other set, one or more set, is arbitrarily selected from a plurality of correction approximate straight-line group information. For example, a configuration, in which one set of correction approximate straight-line group information (e.g. as to white) is fixed, and the other set of correction approximate straight-line group information (e.g. as to red) is selected, may be used. Further, the 'selection' is carried out in accordance with information for identifying correction approximate straight-line group information such as color information. Note that the selected two sets of correction approximate straight-line group information are, for example, outputted to a first correcting unit.

(First correcting unit)

The 'first correcting unit' corrects the pixel output value by means of the two or more sets of correction approximate straight-line group information selected by the first selecting unit. Here, examples of the 'correction of the pixel output value' include correcting in accordance with a predetermined rule by means of pixel output value, and correcting in accordance with a predetermined rule by means of pixel output value and ratio of a plurality of pixel output values. Examples of the 'predetermined rule' include a rule in which if the pixel output value is less (or more) than a predetermined value, a predetermined correction approximate straight-line group information is selected, and a rule in which if the pixel output value is within a predetermined range of values, a predetermined correction approximate straight-line group information is selected according to a ratio of a plurality of pixel output values. For example, it is assumed that four types of pixels (A1), (A2), (A3), and (A4) are used. In the case of correcting the pixel (A1), in cases where the pixel output value a1 is more than or equal to a predetermined value, the ratio a1/a2 is calculated, and if the ratio a1/a2 is more than or equal to 1, correction approximate straight-line group information of red is selected, and if it is less than or equal to 1, correction approximate straight-line group information of green is selected, so that the pixel output value is corrected. Further, examples of the 'correction' include a correction, in which two sets of correction approximate straight-line group information is used for one pixel, and a correction, in which although one set of correction approximate straight-line group information is used for one pixel, as a whole, two or more sets of correction approximate straight-line group information are used with respect to each pixel type. Concrete examples will be described hereinbelow.

(When two sets of correction approximate straight-line group information are used)

Hereinbelow, the correction, in which two sets of correction approximate straight-line group information are used for one pixel, will be described. Note that in this description, 2-segment CCD, and the four types of pixels (A1), (A2), (A3), and (A4), which configure the CCD, are used.

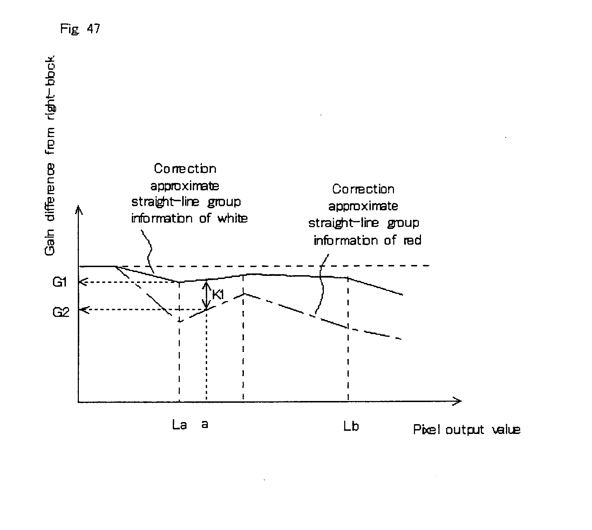

Fig. 47 is a diagram showing a concept of correction approximate straight-line group information to be used for correction. The description will be made based on Fig. 47.

At the outset, if the pixel output value of a specific pixel A (A1) in the left block is a, correction approximate straight-line group information of white and of red are selected in accordance with a predetermined rule, so that, as shown in Fig. 47, a gain difference G1 from the pixel output value in the right block is acquired from the correction approximate straight-line group information of white, and a gain difference G2 from the pixel output value in the right block is acquired from the correction approximate straight-line group information of red. Subsequently, a white-and-red gain difference expressed by the formula K1 = G1 -G2 is acquired from the gain differences G1 and G2. In this case, the right block is set as a standard block, and the pixel output value of a pixel in the left block is corrected. Accordingly, a corrected value, in which the gain difference is added to its pixel output value, therefore, a corrected value a+K1, in which the gain difference K1 is added to its pixel output value a, is acquired. Further, as to the other pixels having the same pixel type (A1), correction is similarly carried out. In addition, similar to this, in correcting the pixels (A2), (A3) and (A4), a plurality of correction approximate straight-line group information for each pixel (A2), (A3) and (A4), and the pixel output values a2, a3 and a4 are used. By the above process, as to the four types of pixels (A1), (A2), (A3), and (A4), which configure all pixels, correction can be carried out.

(Correction, in which although one set of correction approximate straight-line group information is used for one pixel, as a whole, two or more sets of correction approximate straight-line group information are used with respect to number of pixel types)

Hereinbelow, the correction, in which although one set of correction approximate straight-line group information is used for one pixel, as a whole, two or more sets of correction approximate straight-line group information are used with respect to number of pixel types, will be described. Note that in this description, 2-segment CCD, and the four types of pixels (A1), (A2), (A3), and (A4), which configure the CCD, are used.

Prior to the description, the 'predetermined rule' will be explained.

(Predetermined rule)

(Rule 1) In cases where the pixel output value is less than or equal to La, correction approximate straight-line group information of white is selected.

(Rule 2) In cases where the pixel output value is between La and Lb, a ratio of a pixel output value of a specific pixel to a pixel output value of an adjacent pixel is calculated. If the ratio is more than or equal to 1, correction approximate straight-line group information of red is selected, and if the ratio is less than or equal to 1, correction approximate straight-line group information of green is selected.

(Rule 3) In cases where the pixel output value is more than or equal to Lb, correction approximate straight-line group information of blue is selected.

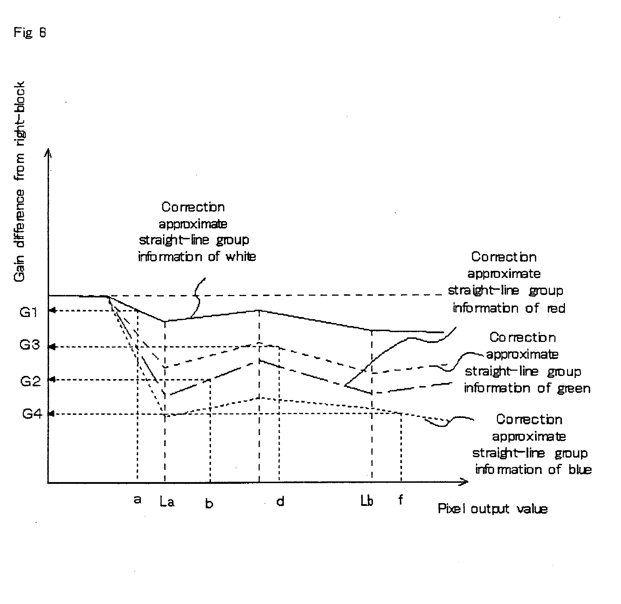

Fig. 8 is a diagram showing a concept of correction approximate straight-line group information to be used for correction.

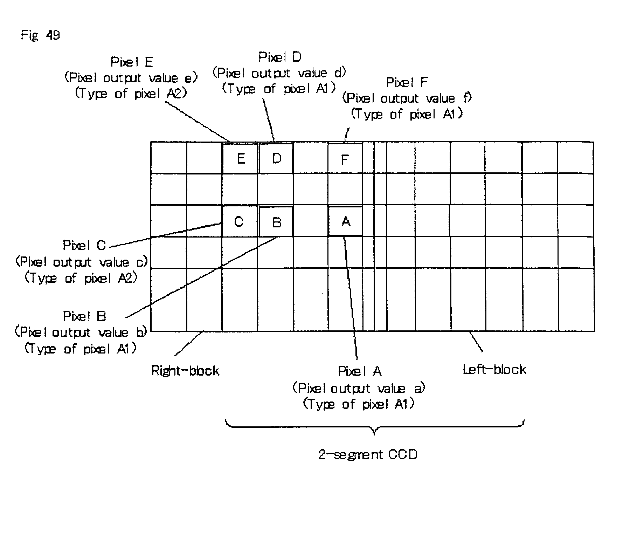

Fig. 49 is a diagram showing specific pixels A(A1), B(A1), C(A2), D(A1), E(A2), and F(A1), which are arranged in different positions. The correcting method will be described with reference to Fig. 8 and 49. At the outset, in cases where a pixel output value of the specific pixel A(A1) in the left block is a (<La), correction approximate straight-line group information of white is selected in accordance with the predetermined rule (rule 1), so that as shown in Fig. 8, a gain difference G 1 from the pixel output value in the right block is acquired. In this case, the right block is set as a standard block, and the pixel output value of a pixel in the left block is corrected. Accordingly, a corrected value, in which the gain difference is added to its pixel output value, therefore, a corrected value a + G1, in which the gain difference G1 is added to its pixel output value a, is acquired. In this case, amount of the pixel output value is used for selecting the correction approximate straight-line group information.

In cases where the pixel output value of the pixel B(A1) in the left block is b (between La and Lb), a ratio of the pixel output value b of the pixel B(A1) to the pixel output value c of the adjacent pixel C(A2) is calculated. If the ratio b/c is more than or equal to 1, correction approximate straight-line group information of red is selected (rule 2), so that as shown in Fig. 8, a gain difference G2 from the pixel output value in the right block is acquired. The pixel B(A1) is corrected by adding the gain difference G2 to its pixel output value b. Subsequently, in cases where the pixel output value of the pixel D(A1) in the left block is d (between La and Lb), a ratio of the pixel output value d of the pixel D(A1) to the pixel output value e of the adjacent pixel E(A2) is calculated. If the ratio d/e is less than or equal to 1, correction approximate straight-line group information of green is selected (rule 2), so that as shown in Fig. 8, a gain difference G3 from the pixel output value in the right block is acquired. The pixel D(A1) is corrected by adding the gain difference G3 to its pixel output value. Subsequently, in cases where the pixel output value of the specific pixel F(A1) is f (>=Lb), the correction approximate straight-line group information of blue is selected in accordance with the predetermined rule (rule 3), so that as shown in Fig. 8, a gain difference G4 from the pixel output value in the right block is acquired. The pixel F(A1) is corrected by adding the gain difference G4 to its pixel output value. Further, as to the other pixels having same pixel type (A1), correction is similarly carried out. In addition, similar to this, in correcting the pixels (A2), (A3) and (A4), a plurality of correction approximate straight-line group information for each pixel (A2), (A3) and (A4), and the pixel output values a2, a3 and a4, or the ratios a1/a2 and a3/a4 are used. By the above process, as to the four types of pixels (A1), (A2), (A3), and (A4), which configure all pixels, correction can be carried out.

Note that in the above description, the pixel output value of the standard block is not corrected, however, the present invention is not limited to this. For example, in the case of 2-segment CCD, as to the left block, the corrected value acquired from the gain difference may be added to the pixel output value, and as to the right block, the corrected value acquired from the gain difference may be subtracted from the pixel output value.

<Process flow>

Hereinbelow, a processing flow of the first embodiment will be described. Note that the after-mentioned processing flow can be implemented as a method, as a program operated on a computer, or as a readable recording medium storing the program. (the same is applied to the other processing flows in this specification).

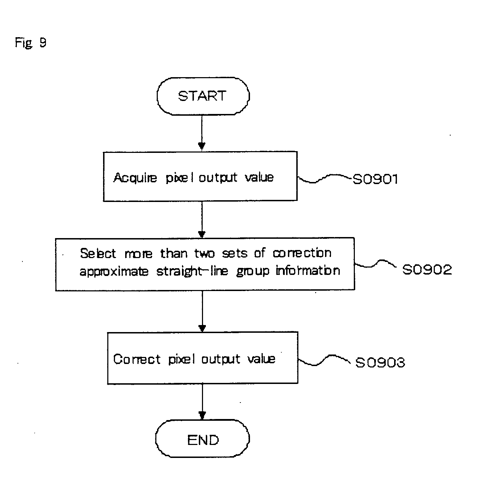

Fig. 9 is a flow chart of the first embodiment.

In the correcting apparatus for multi-segment reading CCD, at the outset, an acquiring step for pixel output value acquires a pixel output value of the multi-segment CCD (step S0901). Subsequently, a first selecting step selects two or more sets of correction approximate straight-line group information from a plurality of correction approximate straight-line group information based on the pixel output value acquired by the acquiring step for pixel output value (step S0902). Subsequently, a first correcting step corrects the pixel output value by means of the two or more sets of correction approximate straight-line group information selected by the first selecting step (step S0903).

(Recording apparatus for digital images)

The first embodiment is applicable to a recording apparatus for digital images provided with the correcting apparatus for multi-segment reading CCD such as a digital camera, a movie apparatus, or a video camera.

<Brief description of effects of first embodiment>

According to the first embodiment, it becomes possible to correct errors in hue between segmented blocks of a CCD of poor quality. The reason for this is that appropriate correction with respect to each pixel is possible by means of a plurality of correction approximate straight-line group information.

«Second embodiment»

Hereinbelow, a second embodiment of the present invention will be described.

<Concept of second embodiment>

Hereinbelow, a concept of the second embodiment will be described. In the second embodiment, in generating correction approximate straight-line group information, data indicating that carrier component is close to 0 (e.g., white) is acquired (in the present specification, the carrier component is called as pixel output value), so that the correction approximate straight-line group information is generated at the outset. After that, a plurality of data indicating that carrier component is large (e.g., red, green, and blue) are acquired, so that a plurality of error correction approximate straight-line group information is generated from the difference between the correction approximate straight-line group information of data indicating that carrier component is close to 0, and the plurality of correction approximate straight-line group information of data indicating that carrier component is large. In normal photographing, correction is carried out by means of correction approximate straight-line group information of data indicating that carrier component is close to 0. At the same time, the carrier component ratio of each pixel to adjacent pixel is detected, and error correction approximate straight-line group information is selected according to the ratio. Error correction value is calculated from the selected error correction approximate straight-line group information, so that a final error correction value is determined from the calculated error correction value, the carrier component, and the carrier component ratio. Addition/subtraction of the determined error correction value and a correction value, which has been calculated from correction approximate straight-line group information, is carried out, so that a final correction value is calculated. The second embodiment is not limited to the above-mentioned two-step calculation of correction value, and may be multi-step calculation of correction value (three or more steps), in which correction of error differences are further carried out after gain correction of the carrier components between a plurality of blocks, thereby carrying out more accurate correction.

<Specifying of components>

Hereinbelow, components of the second embodiment will be described.

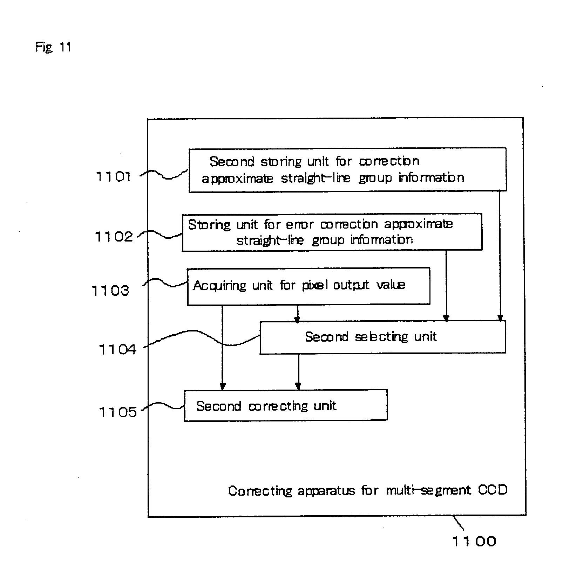

Fig. 11 is a functional block diagram of the second embodiment. A correcting apparatus for multi-segment CCD 1100 of the second embodiment comprises a second storing unit for correction approximate straight-line group information 1101, a storing unit for error correction approximate straight-line group information 1102, an acquiring unit for pixel output value 1103, a second selecting unit 1104, and a second correcting unit 1105.

(Second storing unit for correction approximate straight-line group information)

The 'second storing unit for correction approximate straight-line group information' stores correction approximate straight-line group information for correcting output differences between segment reading blocks of a multi-segment CCD. The correction approximate straight-line group information stored by the second storing unit for correction approximate straight-line group information may be at least one set. The correction approximate straight-line group information stored by the second storing unit for correction approximate straight-line group information is used for the first step calculation of correction value.

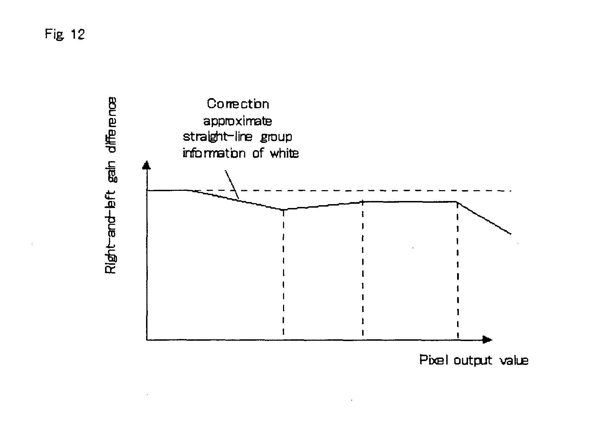

Fig. 12 shows correction approximate straight-line group information as to the pixel (A1) of four types of pixels (A1), (A2), (A3), and (A4), which configure all pixels, therefore, correction approximate straight-line group information of standard color (e.g., white) is used for correction.

Fig. 12 shows correction approximate straight-line group information of 2-segment CCD. The horizontal axis indicates pixel output value, and the vertical axis indicates gain difference of the pixel output values between the right and left pixels. As to the other pixels (A2), (A3), and (A4), correction approximate straight-line group information are similarly generated.

The correction approximate straight-line group information stored by the second storing unit for correction approximate straight-line group information is, for example, outputted to the second selecting unit. Note that the generation of the correction approximate straight-line group information is the same as that of the first embodiment, so that the description will be omitted.

(Storing unit for error correction approximate straight-line group information)

The 'storing unit for error correction approximate straight-line group information' stores a plurality of correction approximate straight-line group information for correcting output differences between segment reading blocks of a multi-segment CCD. Here, the 'error correction approximate straight-line group information' corresponds to correction approximate straight-line group information of difference from the standard correction approximate straight-line group information used for further correction of error differences after the first step calculation of correction value by means of the standard correction approximate straight-line group information. For example, a vertical axis indicates pixel output values of respective pixels, and a horizontal axis indicates gain differences of pixel output values between the standard correction approximate straight-line group information and the other correction approximate straight-line group information, so that the error correction approximate straight-line group information is graphically indicated. Note that the error correction approximate straight-line group information stored by the storing unit for error correction approximate straight-line group information may be at least one set. The error correction approximate straight-line group information stored by the storing unit for error correction approximate straight-line group information is used for calculation of correction value of second and subsequent steps.

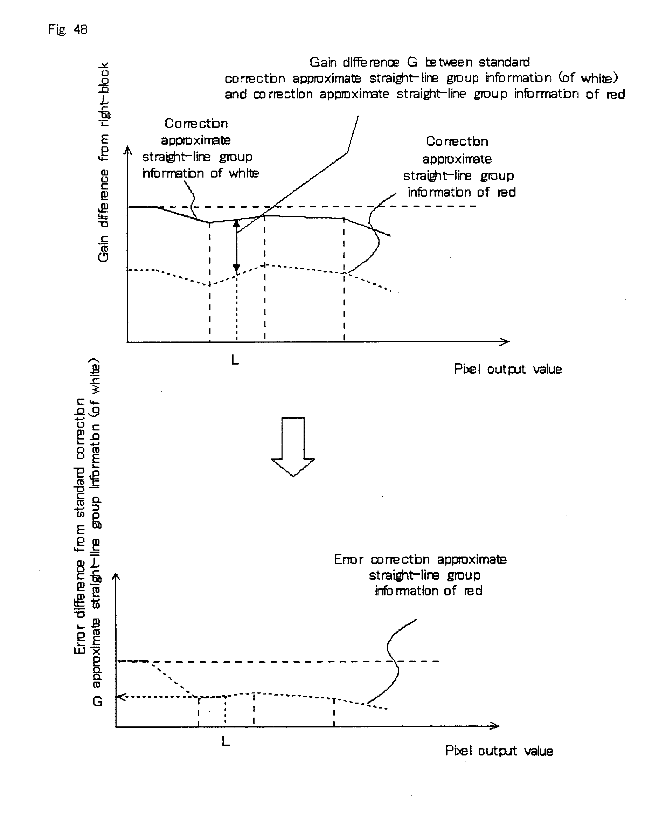

Fig. 48 shows generation of error correction approximate straight-line group information of red in cases where the correction approximate straight-line group information of white is set as a standard. The upper portion of Fig. 48 indicates correction approximate straight-line group information of white and of red, which have been generated similarly to the first embodiment, and the lower portion of Fig. 48 indicates generated error correction approximate straight-line group information. As shown in the upper portion of Fig. 48, differences of the correction approximate straight-line group information between white and red at the pixel output value L is G. Here, by plotting G (error difference of the correction approximate straight-line group information between red and standard color (white)) on the vertical axis, the error correction approximate straight-line group information of the lower portion of Fig. 48 is generated. As to the other colors, error correction approximate straight-line group information are similarly generated.

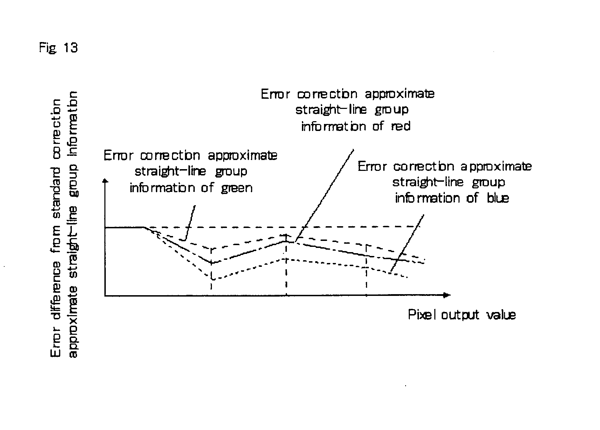

Fig. 13 shows error correction approximate straight-line group information as to the pixel (A1) of four types of pixels (A1), (A2), (A3), and (A4), which configure all pixels, therefore, error correction approximate straight-line group information of a plurality of colors (e.g., red, green and blue). Note that in Fig. 13, the horizontal axis indicates pixel output value, and the vertical axis indicates error difference from the standard correction approximate straight-line group information. For example, if a dynamic range of the vertical axis in the case of the plurality of correction approximate straight-line group information stored by the first storing unit for correction approximate straight-line group information of the first embodiment requires 14 bits, a dynamic range of the vertical axis in the case of the error correction approximate straight-line group information can be reduced to 8 bits. As to the other pixels (A2), (A3), and (A4), error correction approximate straight-line group information is similarly generated.

The error correction approximate straight-line group information stored by the storing unit for error correction approximate straight-line group information is, for example, outputted to the second selecting unit. Note that the generation of the error correction approximate straight-line group information excluding the calculation of difference from the standard correction approximate straight-line group information stored by the second storing unit for correction approximate straight-line group information is the same as the generation of correction approximate straight-line group information of the first embodiment, so that the description will be omitted.

(Acquiring unit for pixel output value)

The 'acquiring unit for pixel output value' acquires a pixel output value of the multi-segment CCD. The pixel output value is, for example, outputted to the second selecting unit or to the second correcting unit. The other features are the same as those of the acquiring unit for pixel output value of the first embodiment, so that the description will be omitted.

(Second selecting unit)

The 'second selecting unit' selects correction approximate straight-line group information from a plurality of correction approximate straight-line group information stored by the second storing unit for correction approximate straight-line group information based on the pixel output value acquired by the acquiring unit for pixel output value, and further selects error correction approximate straight-line group information stored by the storing unit for error correction approximate straight-line group information based on the pixel output value acquired by the acquiring unit for pixel output value. Note that the selected correction approximate straight-line group information and the selected error correction approximate straight-line group information are, for example, outputted to the second selecting unit or to the second correcting unit. The concept of the selection of the correction approximate straight-line group information and the error correction approximate straight-line group information is the same as that of the first selecting unit of the first embodiment, so that the description will be omitted.

(Second correcting unit)

The 'second correcting unit' corrects said pixel output value by means of the correction approximate straight-line group information and the error correction approximate straight-line group information selected by the second selecting unit. Therefore, the first step calculation of correction value is carried out by means of the standard correction approximate straight-line group information, and calculation of correction value of the second and subsequent steps is carried out by means of the error correction approximate straight-line group information. For example, the case of using four types of pixels (A1), (A2), (A3), and (A4) will be described. In the case of correcting the pixel (A1), at the outset, correction value is calculated by means of the correction approximate straight-line group information selected by the second selecting unit for error correction approximate straight-line group information. Subsequently, error correction value is calculated by means of the error correction approximate straight-line group information selected by the second selecting unit. Finally, according to the correction value calculated by means of the correction approximate straight-line group information, and to the error correction value calculated by means of the error correction approximate straight-line group information, a final correction value of the pixel output value as to the pixel (A1) is determined. Details of the correction will be described, hereinbelow. Note that, the basic concept of correction of the second embodiment excluding calculation of correction value, in which the calculation is carried out by two or more steps by means of the correction approximate straight-line group information and the error correction approximate straight-line group information, is the same as that of the correction method of the first embodiment, so that the description will be omitted.

Hereinbelow, the calculation of correction value, in which the calculation is carried out by two or more steps by means of the correction approximate straight-line group information and the error correction approximate straight-line group information, will be described. Note that in the description, 2-segment CCD and four types of pixels (A1), (A2), (A3), and (A4), which configure the CCD, will be used.

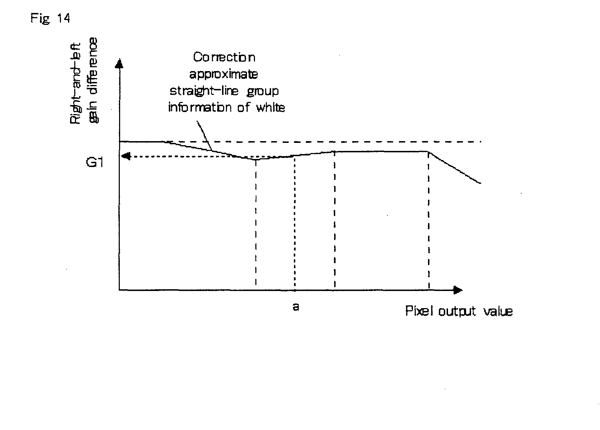

Fig. 14 shows a concept of standard correction approximate straight-line group information of white used for the first step calculation of correction value. Assuming the pixel output value of the specific pixel A(A1) in the left block is a, as shown in Fig. 14, the gain difference G1 is acquired.

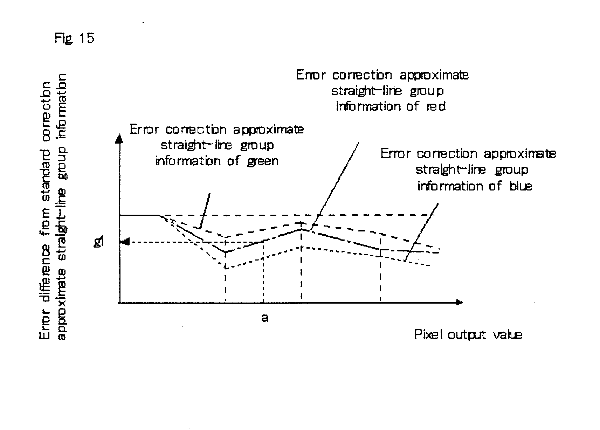

Fig. 15 shows a concept of error correction approximate straight-line group information of white used for the second step calculation of correction value. Ratio of the pixel output value a of the pixel A(A1) to the pixel output value b of the adjacent pixel B(A2) is calculated. Since the ratio a/b is more than or equal to 1, the error correction approximate straight-line group information of red is selected in accordance with the predetermined rule, so that the error difference g1 is acquired as shown in Fig. 15.

Subsequently, from the gain difference G1 and the error difference g1, the final correction value G1 + g1 is calculated. As to the other pixels of the same type of pixel (A1), the calculations are similarly carried out. Further, as to the other pixels (A2), (A3), and (A4), the calculations are similarly carried out. Thus, the corrections as to the four types of pixels (A1), (A2), (A3), and (A4), which configure all pixels, can be carried out.

Note that the present invention is not limited to the above-mentioned two-step calculation of correction value, and may be calculation of three or more steps, in which correction by means of error correction approximate straight-line group information is carried out after the two-step calculation.

(Correcting apparatus for multi-segment CCD)

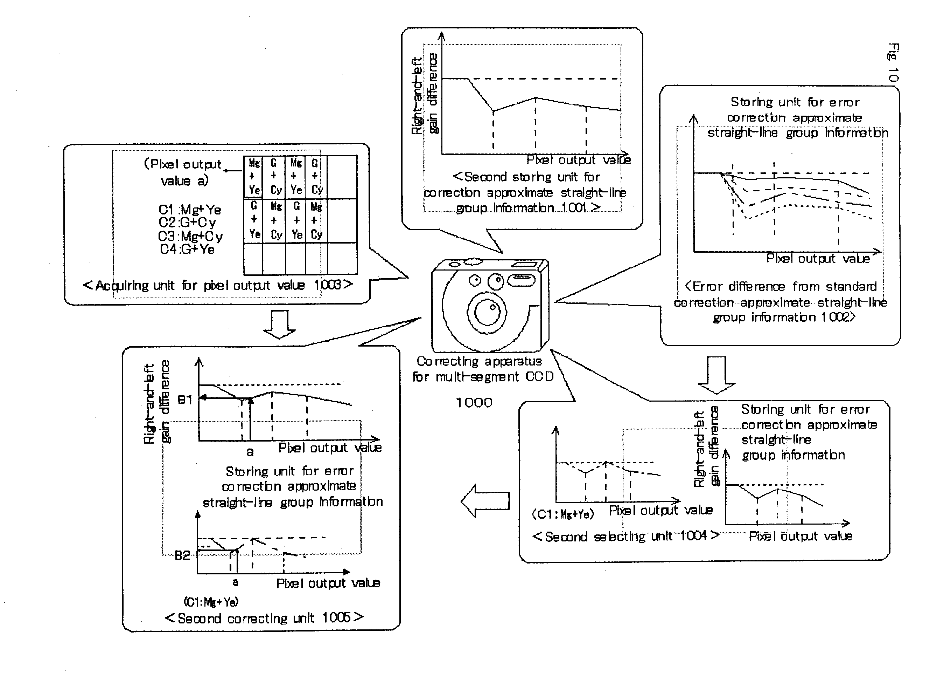

Fig. 10 is a conceptual diagram of the correcting apparatus for multi-segment CCD of the second embodiment. Note that a CCD by means of a complementary color filter will be exemplified in Fig. 10.

In a correcting apparatus for multi-segment CCD of the second embodiment 1000, a second storing unit for correction approximate straight-line group information 1001 preliminarily stores a plurality of correction approximate straight-line group information (in Fig.10, one set of correction approximate straight-line group information generated by capturing an object of white) in a memory unit therein, and the storing unit for error correction approximate straight-line group information 1002 stores error correction approximate straight-line group information (in Fig.10, three sets of error correction approximate straight-line group information generated by capturing objects of red, green and blue) in a memory unit therein. Here, if a user of the correcting apparatus for multi-segment CCD takes moving images, an acquiring unit for pixel output value 1003 acquires pixel output values of all pixels. Here, a pixel output value a of a specific pixel (in Fig. 10, a pixel output value of a pixel (C1) in the left corner) is considered. A second selecting unit 1004 selects correction approximate straight-line group information of white stored by the second storing unit for correction approximate straight-line group information, and further selects error correction approximate straight-line group information stored by the storing unit for error correction approximate straight-line group information, for example, the error correction approximate straight-line group information of red as to the pixel (C1). Subsequently, a second correcting unit 1005 calculates a correction values B1 and B2 from the pixel output value a by means of the correction approximate straight-line group information of white and the error correction approximate straight-line group information of red, which have been selected by the second selecting unit, and carries out correction. Note that, in the case of the complementary color filter, similar to the case of (C1), the correction approximate straight-line group information and the error correction approximate straight-line group information of (C2), (C3), and (C4) are generated (Fig. 10 indicates the correction approximate straight-line group information of white, and the error correction approximate straight-line group information of red, green and blue as to the pixel (C1)). In the correcting apparatus for multi-segment CCD of the second embodiment, correction is carried out by means of the standard correction approximate straight-line group information, and the error difference is further corrected by means of the error correction approximate straight-line group information. It is characterized in that the generation method of the error correction approximate straight-line group information is based on the difference from the standard correction approximate straight-line group information. Therefore, a dynamic range in the case of the error correction approximate straight-line group information can be reduced, thereby saving memory capacity. For example, although the dynamic range in the case of using the plurality of correction approximate straight-line group information of the first embodiment requires 14 bits, the dynamic range in the case of using the error correction approximate straight-line group information of the second embodiment can be reduced to 8 bits. Note that the basic concept of the correction method is the same as that of the first embodiment.

<Process flow>

Hereinbelow; the processing flow of the second embodiment will be described.

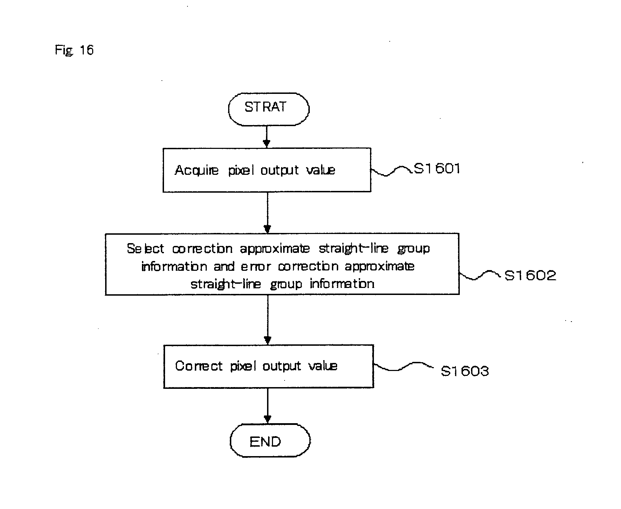

Fig. 16 is a flow chart of the second embodiment.

In the correcting apparatus for multi-segment reading CCD, at the outset, an acquiring step for pixel output value acquires a pixel output value of the multi-segment CCD (step S1601). Subsequently, a second selecting step selects correction approximate straight-line group information based on the pixel output value acquired by the acquiring step for pixel output value, and further selects error correction approximate straight-line group information based on the pixel output value acquired by the acquiring step for pixel output value (step S1602). Subsequently, a second correcting step corrects the pixel output value by means of the correction approximate straight-line group information and the error correction approximate straight-line group information, which have been selected by the second selecting step (step S1603).

(Recording apparatus for digital images)

The second embodiment is applicable to a recording apparatus for digital images provided with the correcting apparatus for multi-segment reading CCD such as a digital camera, a movie apparatus, or a video camera.

<Brief description of effects of second embodiment>

According to the second embodiment, it becomes possible to correct errors in hue between segmented blocks of a CCD of poor quality. The reason for this is that appropriate correction with respect to each pixel is possible by means of a plurality of correction approximate straight-line group information. In addition, by using error correction approximate straight-line group information, it becomes possible to reduce necessary memory amount for storing in comparison with the case of using only correction approximate straight-line group information.

**<<Third embodiment>>**

Hereinbelow, a third embodiment of the present invention will be described.

<Concept of the third embodiment>

Hereinbelow, a concept of the third embodiment will be described. The third embodiment is the correcting apparatus for multi-segment CCD according to the first embodiment, wherein the first selecting unit carries out the selection based on a ratio of pixel output value of a pixel, of which output is to be corrected, to pixel output value of a pixel, which is adjacent to the pixel. The third embodiment is characterized in that color components (carrier components) are used for the selection of the correction approximate straight-line group information. The reason for this is that the right-and-left difference due to a property of CCD or to fluctuations of analog circuit is proportional to the ratio of the carrier components, as shown by experiments. Note that features of the third embodiment excluding the feature, in which the first selecting unit selects two or more sets of correction approximate straight-line group information from a plurality of correction approximate straight-line group information stored by the first storing unit for correction approximate straight-line group information based on the pixel output value, are the same as those of the first embodiment, so that the description will be omitted.

<Brief description of effects of third embodiment>

According to the third embodiment, it becomes possible to select two or more sets of correction approximate straight-line group information from a plurality of correction approximate straight-line group information based on the ratio of pixel output value (ratio of carrier components) of the pixel to the adjacent pixel.

**<<Fourth embodiment>>**

Hereinbelow, a fourth embodiment of the present invention will be described.

<Concept of the fourth embodiment>

Hereinbelow, a concept of the fourth embodiment will be described. The fourth embodiment is the correcting apparatus for multi-segment CCD according to the second embodiment, wherein the second selecting unit carries out the selection based on a ratio of pixel output value of a pixel, of which the output is to be corrected, to pixel output value of a pixel, which is adjacent to the pixel. The fourth embodiment is characterized in that color components (carrier components) are used for the selection of the correction approximate straight-line group information (error correction approximate straight-line group information). The reason for this is that the right-and-left difference due to a property of CCD or to fluctuations of analog circuit is proportional to the ratio of the carrier components, as shown by experiments. Note that features of the fourth embodiment excluding the feature, in which the second selecting unit selects correction approximate straight-line group information based on the pixel output value, and further selects error correction approximate straight-line group information based on the pixel output value, are the same as those of the second embodiment, so that the description will be omitted.

<Brief description of effects of fourth embodiment>

According to the fourth embodiment, it becomes possible to select the correction approximate straight-line group information and the error correction approximate straight-line group information, which are used for correction, based on the ratio of pixel output value (ratio of carrier components) of the pixel to the adjacent pixel.

**<<Fifth embodiment>>**

Hereinbelow, a fifth embodiment of the present invention will be described.

<Concept of the fifth embodiment>

Hereinbelow, a concept of the fifth embodiment will be described. The fifth embodiment is the correcting apparatus for multi-segment CCD according to the first embodiment, wherein the first correcting unit comprises first correcting means according to output ratio, which carries out the correction by using a ratio of pixel output value of a pixel, of which output is to be corrected, to pixel output value of a pixel, which is adjacent to the pixel.

<Specifying of components>

Hereinbelow, components of the fifth embodiment will be described.

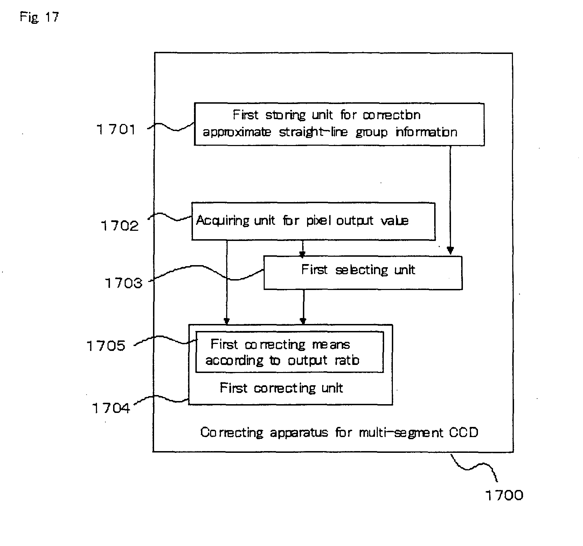

Fig. 17 is a functional block diagram of the fifth embodiment. A correcting apparatus for multi-segment CCD 1700 of the fifth embodiment comprises a first storing unit for correction approximate straight-line group information 1701, an acquiring unit for pixel output value 1702, a first selecting unit 1703, and a first correcting unit 1704. In addition, the first correcting unit comprises first correcting means according to output ratio 1705.

<Description of components>

The 'first storing unit for correction approximate straight-line group information', the 'acquiring unit for pixel output value, and the 'first selecting unit' are the same as those of the first embodiment, so that the description will be omitted.

(First correcting unit)

The 'first correcting unit' comprises first correcting means according to output ratio 1705. Here, the first correcting means according to output ratio carries out the correction by using a ratio of pixel output value of a pixel, of which output is to be corrected, to pixel output value of a pixel, which is adjacent to the pixel. In calculation of the correction value of the pixel output value by means of the correction approximate straight-line group information, ratio of color components (carrier components) is used. The reason for this is that the right-and-left difference due to a property of CCD or to fluctuations of analog circuit is proportional to the ratio of the carrier components, as shown by experiments. A concrete example of 'correction' will be described in the after-mentioned first example.

<Process flow>

The processing flow of the fifth embodiment is the same as that of the first embodiment, so that the description will be described.

**(First example)**

Hereinbelow, a first example of the fifth embodiment will be described. The first example will describe the correcting apparatus for multi-segment CCD in the case of 2-segment reading CCD.

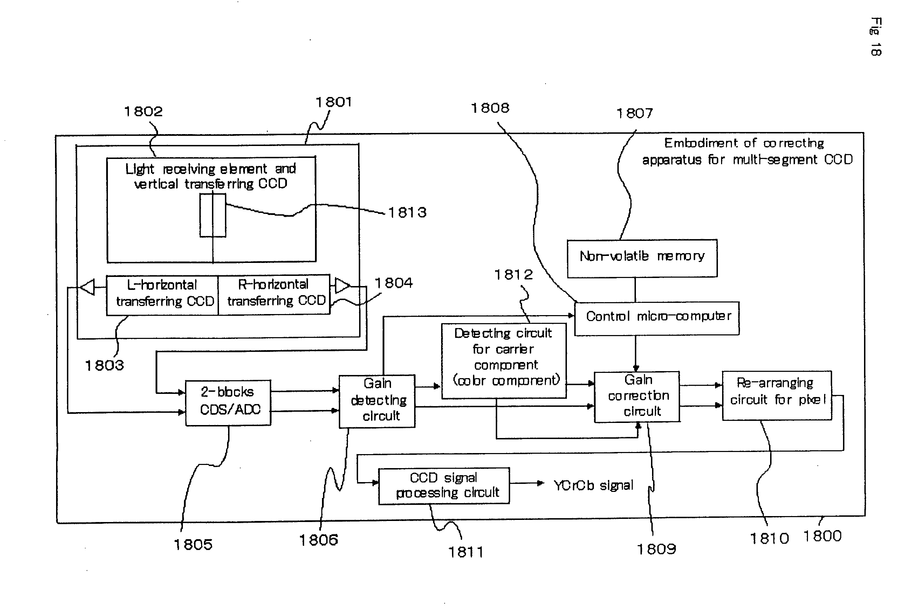

Fig. 18 is a functional block diagram of the correcting apparatus for 2-segment CCD of the first example. The correcting apparatus for multi-segment CCD of the first example comprises a 2-segment reading CCD 1801, a 2-block CDS(Correlated Double Sampling)/ADC(Analog Digital Conversion) circuit 1805, a gain detecting circuit (corresponding to the acquiring unit for pixel output value) 1806, a non-volatile memory (e.g., EEPROM, corresponding to the first storing unit for correction approximate straight-line group information) 1807, a control microcomputer 1808, a gain correcting circuit (corresponding to the first selecting unit and to the first correcting unit) 1809, a re-arranging circuit for pixel 1810, a CCD signal processing circuit 1811, and a detecting circuit for carrier components 1812.

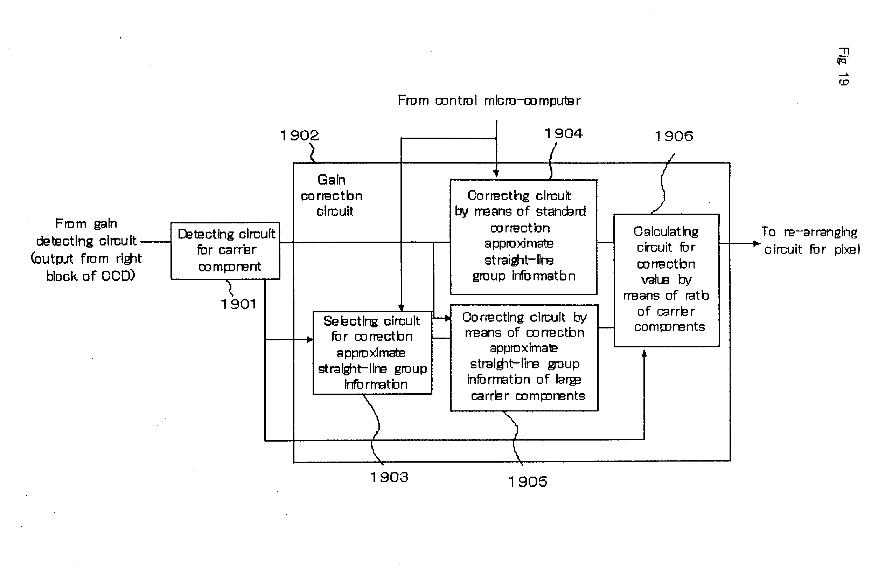

Fig. 19 is a functional block diagram of a gain correcting circuit of the first example of the fifth embodiment. Fig. 19 shows a detecting circuit for carrier components 1901, a gain correcting circuit 1902, a selecting circuit for correction approximate straight-line group information (corresponding to the first selecting unit) 1903, a correcting circuit by means of standard correction approximate straight-line group information (corresponding to the first correcting unit) 1904, a correcting circuit by means of correction approximate straight-line group information of large carrier components (corresponding to the first correcting unit) 1905, and a calculating circuit for correction value by means of ratio of carrier components (corresponding to the first correcting means according to output ratio) 1906.

In addition, the 2-segment reading CCD 1801 comprises a light-receiving element (photodiode) and a vertical transferring CCD 1802, and horizontal transferring CCDs (corresponding to the horizontal transferring unit) 1803 and 1804. The light for photographing from an object is photoelectric converted by the light-receiving element 1802, and is stored as charge. This charge is transferred to the vertical transferring CCD 1802 at a certain timing. The vertical transferring CCD 1802 is divided into two portions, right and left portions, and the charges in the left-half of vertical transferring CCD are transferred to the left-half of the horizontal transferring CCD 1803, and the charges in the right-half of vertical transferring CCD are transferred to the right-half of the horizontal transferring CCD 1804 at a certain timing of respective lines. The horizontal transferring CCDs 1803 and 1804 transfer the transferred charges, respectively, and the charges are outputted as voltage signals though amplifiers of right and left sides. The outputted signal is transferred to the 2-block CDS/ADC circuit 1805, and digitalized. The outputted signal is A/D converted, and is read in the respective blocks, so that a difference in level occurs. It is known that this level difference occurs in the CCD and in the A/D conversion circuit, and is dependent on the output level of the light-receiving element (Jpn. unexamined patent publication No. 2002-320418). Further, it has been confirmed by an experiment indicating that the difference varies according to the color component (carrier component, output value for pixel of a type of pixel). Moreover, it varies according to a property of a board. The above processes are common in generating the final correction approximate straight-line group information and in normal photographing.

Subsequently, the case of generating the correction approximate straight-line group information will be described. In generating the correction approximate straight-line group information, an object, which has the fewest carrier components and is uniform, is captured in order to generate standard correction approximate straight-line group information. Here, the carrier component will be described. As an example, a CCD provided with a complementary color filter will be used.

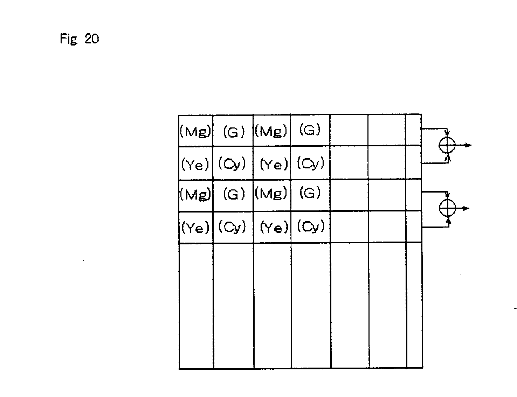

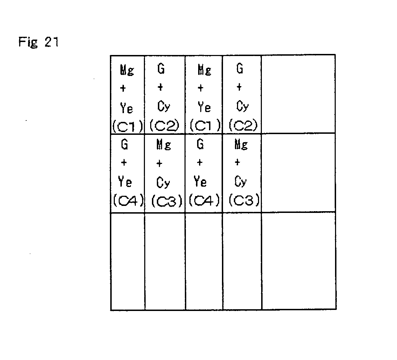

Figs. 20 and 21 are diagrams showing arrangements of the complementary color filter. Normally, an arrangement of the complementary color filter is as shown in Fig. 20, and in shooting moving image, output values for pixel in a vertical direction are added, so that output in an arrangement as shown in Fig. 21 is carried out. Therefore, as to a certain line, the output value $c_1$ for pixel of the pixel (C1: Mg + Ye) and the output value $c_2$ for pixel of the pixel (C2: G + Cy) are alternately outputted. As to a subsequent line, the output value $c_3$ for pixel of the pixel (C3: Mg + Cy) and the output value $c_4$ for pixel of the pixel (C4: G + Ye) are alternately outputted. In photographing a still image, as to a certain field, the output value $d_1$ for pixel of (Mg) and the output value $d_2$ for pixel of (G) are alternately outputted. As to a subsequent field, the output value $d_4$ for pixel of (Ye) and the output value $d_3$ for pixel of (Cy) are alternately outputted. In cases where an object, which has fewer carrier components (e.g., white), is photographed, their ratios in a horizontal direction are close to 1. For example, in shooting moving image, $c_1/c_2=1$, and $c_3/c_4=1$. (This is the same as in the case of a primary color CCD. In the case of the primary color, as to a certain line, the output value $e_1$ for pixel of (R) and the output value $e_2$ for pixel of (G) are alternately outputted. As to a subsequent line, the output value $e_4$ for pixel of (G) and the output value $e_3$ for pixel of (B) are alternately outputted. In the case of the object, which has fewer carrier components, $e_1/e_2=1$, and $e_3/e_4=1$.) Here, from the average value of data of right and left portions of a CCD central area 1813 in Fig. 18 (e.g., average value as to each of the output value $c_1$ for pixel of the pixel C1, the output value $c_2$ for pixel of the pixel C2, the output value $c_3$ for pixel of the pixel C3, and the output value $c_4$ for pixel of the pixel C4), and as to the right-and-left gain difference (e.g., right-and-left gain differences as to the output values $c_1$, $c_2$, $c_3$ and $c_4$ for pixel of the pixels C1, C2, C3 and C4), average values of the gain differences are acquired, and from them, the first correction approximate straight-line group information are generated (e.g., as to each of the pixel (C1), (C2), (C3) and (C4), the first correction approximate straight-line group information is generated). In addition, ratio of carrier component in a horizontal direction at this point is also recorded. Therefore, as to the case of photographing an object, which has fewer carrier components, measurement is carried out changing amount of light for photographing, thereby calculating the ratio of the output values for pixel $c_1/c_2$ and $c_3/c_4$. The ratio $c_1/c_2$ is expressed by wr_C1C2, and the ratio $c_3/c_4$ is expressed by wr_C3C4. Note that the values of $c_1$, $c_2$, $c_3$ and $c_4$ used for calculating the ratios of lines $c_1/c_2$ and $c_3/c_4$ are the average values of $c_1$, $c_2$, $c_3$ and $c_4$ when one of the right or left portion of the CCD central area is set as a standard.

Subsequently, a plurality of correction approximate straight-line group information having large carrier components is generated. Similarly, capture of the objects having large carrier components (e.g., red, green and blue) is carried out changing the amount of light for photographing, and the correction approximate straight-line group information and the ratio of the respective lines are recorded. In this case, the objects of three colors, red, green, and blue, are captured changing the amount of light for photographing, thereby measuring the pixel output values c1, c2, c3, and c4, and calculating the ratios of the pixel output values of the respective lines c1/c2 and c3/c4. From them, correction approximate straight-line group information, which is c1/c2>=wr_C1C2, c1/c2<wr_C1C2, c3/c4>=wr_C3C4, and c3/c4<wr_C3C4, is generated. In this case, the objects of red, green, and blue, are captured changing the amount of light for photographing, thereby generating the correction approximate straight-line group information, which is c1/c2>=wr_C1C2, from the red object, the correction approximate straight-line group information, which is c1/c2<wr_C1C2, from the green object, the correction approximate straight-line group information, which is c3/c4>=wr_C3C4, from the blue object, and the correction approximate straight-line group information, which is c3/c4<wr_C3C4, from the green object. After that, this correction approximate straight-line group information and the ratios of carrier components in the horizontal direction (the ratio of c1/c2>=wr_C1C2, the ratio of c1/c2<wr_C1C2, the ratio of c3/c4>=wr_C3C4, and the ratio of c3/c4<wr_C3C4) are recorded in the non-volatile memory via the control micro computer 1808 (the ratio in the case of c1/c2>=wr_C1C2 is pr_C1C2, the ratio in the case of c1/c2<wr_C1C2 is nr_C1C2, the ratio in the case of c3/c4>=wr_C3C4 is pr_C3C4, and the ratio in the case of c3/c4<wr_C3C4 is nr_C3C4).

Subsequently, the case of normal photographing will be described. In the normal photographing, the control micro computer 1808 sets the correction approximate straight-line group information and the ratios of carrier components in the horizontal direction, which have been stored in the non-volatile memory, to the gain correcting circuit previous to the photographing. The detecting circuit for carrier components 1812 and the gain correcting circuit 1809 are configured as shown in Fig. 19, and operate as follows. In the normal photographing, outputs in the right side of signals inputted from CCD are A/D converted, and are inputted to the detecting circuit for carrier components 1901. Here, as to the lines (C1) and (C2), c1/c2 is calculated as a detection result of carrier components, and as to the lines (C3) and (C4), c3/c4 is calculated as a detection result of carrier components. After that, the detection results of signals and carrier components are inputted to the gain correcting circuit 1902. The detection result of carrier components is inputted to the selecting circuit for correction approximate straight-line group information 1903, so that the correction approximate straight-line group information having the carrier components is selected. For example, detection result of carrier components indicates c1/c2>=wr_C1C2; the correction approximate straight-line group information corresponding to the result is selected. This is inputted to the correcting circuit by means of correction approximate straight-line group information having large carrier components 1905, and is used for correction. At the same time, the ratio pr_C1C2, which corresponds to the correction approximate straight-line group information, is selected. This is inputted to the calculating circuit for correction value by means of ratio of carrier components 1906, and is used for the calculation. Meanwhile, the inputted signal is inputted to the correcting circuit by means of standard correction approximate straight-line group information (its carrier component is close to 0) 1904 and to the correcting circuit by means of correction approximate straight-line group information having large carrier components 1905, and correction values are calculated, respectively.

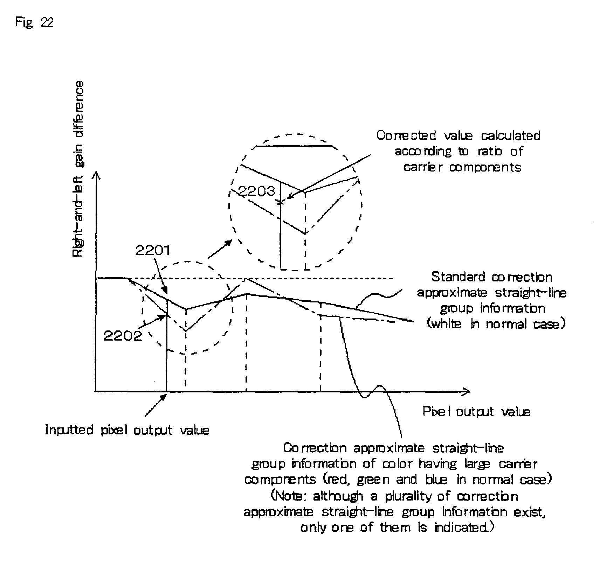

Fig. 22 is a diagram showing the calculation of the correction value. As shown in reference numerals 2202 and 2203 of Fig. 22, correction values are acquired from the respective correction approximate straight-line group information according to the inputted pixel output value. The acquired correction values are inputted to the calculating circuit for correction value by means of ratio of carrier components 1906. In the calculating circuit for correction value 1906, a final correction value is determined according to the ratio of carrier components detected by the circuit 1901. The final correction value is calculated as follows. For example, assuming that in the case of c1/c2>=wr_C1C2, the detected ratio cl/c2= x_ratio, the correction value calculated from the standard correction approximate straight-line group information is A, the correction value calculated from the correction approximate straight-line group information having large carrier components is B, and the final correction value is D, the following formula is acquired.

$$D = (B-A)*(x\_ratio-wr\_C1C2)/(pr\_C1C2-wr\_C1C2)+A$$

Note that the calculation of the correction value can be carried out by means of a coefficient K of the non-linear converting circuit. For example, assuming that in the case of c1/c2>=wr_C1C2, the detected ratio c1/c2= x_ratio, the correction value calculated from the standard correction approximate straight-line group information is A, the correction value calculated from the correction approximate straight-line group information having large carrier components is B, the coefficient of the non-linear converting circuit is K, output is E, and the final correction value is D, the following formula is acquired.

$$E = K*(x\_ratio-wr\_C1C2)/(pr\_C1C2-wr\_C1C2)$$

$$D=(B-A){*}E+A$$

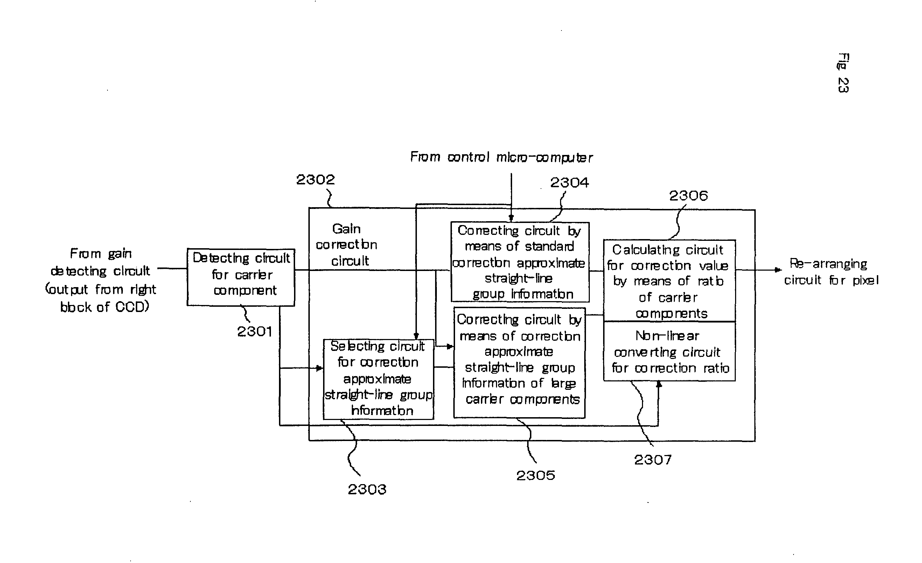

Fig. 23 is a functional block diagram showing the gain correcting circuit in the case of using the coefficient K of the non-linear converting circuit. Fig. 23 shows a detecting circuit for carrier components 2301, a gain correcting circuit 2302, a selecting circuit for correction approximate straight-line group information (corresponding to the first selecting unit) 2303, a correcting circuit by means of standard correction approximate straight-line group information (corresponding to the first correcting unit) 2304, a correcting circuit by means of correction approximate straight-line group information of large carrier components (corresponding to the first correcting unit) 2305, and a calculating circuit for correction value by means of ratio of carrier components (corresponding to the first correcting means according to output ratio) 2306, and a non-linear converting circuit 2307.

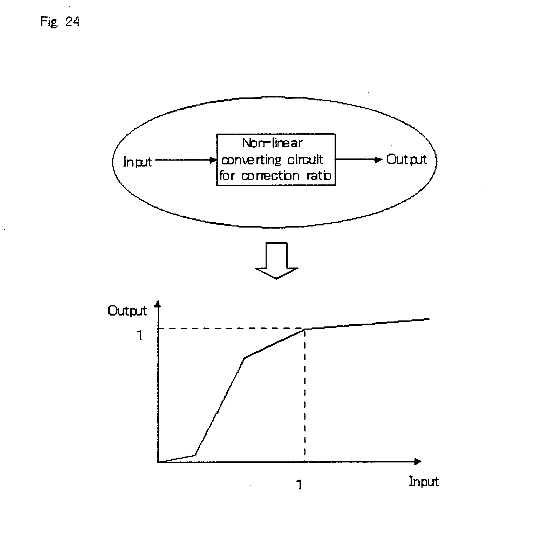

Fig. 24 shows the coefficient K of the non-linear converting circuit. As shown in Fig. 24, output is non-linear for input. By means of the non-linear converting circuit, it becomes possible to carry out more accurate correction.

<Brief description of effects of fifth embodiment>

According to the fifth embodiment, it becomes possible to correct errors in hue between segmented blocks of a CCD of poor quality. The reason for this is that appropriate correction with respect to each pixel is possible by means of a plurality of correction approximate straight-line group information.

**<<Sixth embodiment>>**

Hereinbelow, a sixth embodiment of the present invention will be described.

<Concept of the sixth embodiment>

Hereinbelow, a concept of the sixth embodiment will be described. The sixth embodiment is the correcting apparatus for multi-segment CCD according to the second embodiment, wherein the second correcting unit comprises second correcting means according to output ratio, which carries out the correction by means of a ratio of pixel output value of a pixel, of which output is to be corrected, to pixel output value of a pixel, which is adjacent to the pixel.

<Specifying of components>

Hereinbelow, components of the sixth embodiment will be described.

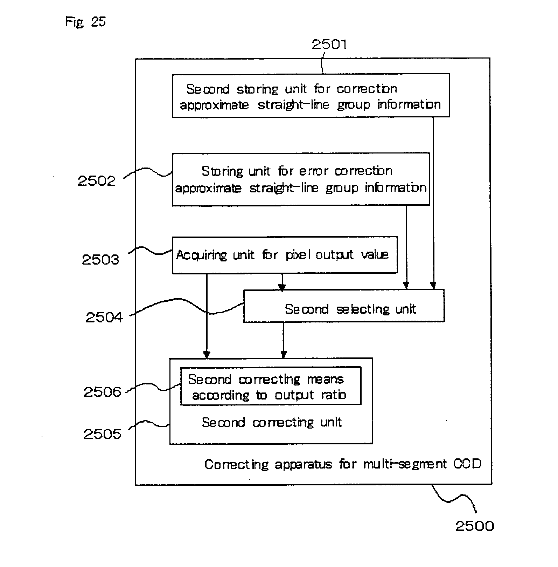

Fig. 25 is a functional block diagram of the fifth embodiment. A correcting apparatus for multi-segment CCD 2500 of the sixth embodiment comprises a second storing unit for correction approximate straight-line group information 2501, a storing unit for error correction approximate straight-line group information 2502, an acquiring unit for pixel output value 2503, a second selecting unit 2504, and a second correcting unit 2505. In addition, the second correcting unit comprises second correcting means according to output ratio 2505. -

<Description of components>

The 'second storing unit for correction approximate straight-line group information', the 'storing unit for error correction approximate straight-line group information', the 'acquiring unit for pixel output value', and the 'second selecting unit' are the same as those of the second embodiment, so that the description will be omitted.
The 'second correcting unit' comprises second correcting means according to output ratio. Here, the 'second correcting means according to output ratio' carries out the correction by means of a ratio of pixel output value of a pixel, of which output is to be corrected, to pixel output value of a pixel, which is adjacent to the pixel. In calculation of the correction value of the pixel output value by means of the correction approximate straight-line group information (error correction approximate straight-line group information), ratio of color components (carrier components) is used. The reason for this is that the right-and-left difference due to a property of CCD or to fluctuations of analog circuit is proportional to the ratio of the carrier components, as shown by experiments. Concrete example of 'correction' will be described in the after-mentioned second example.

<Process flow>

The processing flow of the sixth embodiment is the same as that of the second embodiment, so that the description will be described.

**(Second example)**

Hereinbelow, a second example of the sixth embodiment will be described. The second example will explain about the correcting apparatus for multi-segment CCD in the case of 2-segment reading CCD.
Fig. 18 is a functional block diagram of the correcting apparatus for 2-segment CCD of the second example, and is the same as that of the first example of the fifth embodiment.

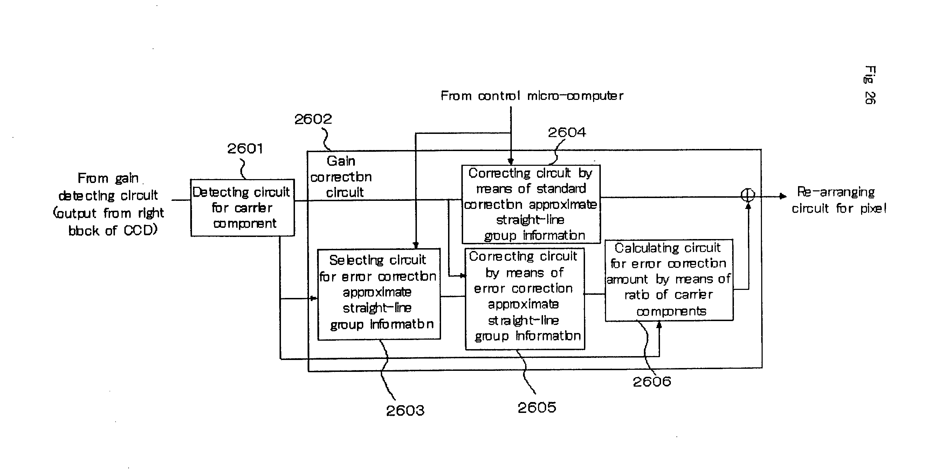

Fig. 26 is a functional block diagram of a gain correcting circuit of the second example of the sixth embodiment. Fig. 26 shows a detecting circuit for carrier components 2601, a gain correcting circuit 2602, a selecting circuit for correction approximate straight-line group information (corresponding to the second selecting unit) 2603, a correcting circuit by means of standard correction approximate straight-line group information (corresponding to the second correcting unit) 2604, a correcting circuit by means of error correction approximate straight-line group information (corresponding to the second correcting unit) 2605, and a calculating circuit for error correction amount by means of ratio of carrier components (corresponding to the second correcting means according to output ratio) 2606.
Subsequently, the generation of the correction approximate straight-line group information and the error correction approximate straight-line group information, and the normal photographing of the second example will be described. At the outset, in generating the correction approximate straight-line group information and the error correction approximate straight-line group information, similar to the first example of the fifth embodiment, an object having few carrier components is captured, so that the standard correction approximate straight-line group information is generated. The ratio in the horizontal direction is also recorded. The above processes are the same as those of the first example. Subsequently, objects having large carrier components are captured, so that data is acquired. Here, differently from the first example, the error correction approximate straight-line group information is generated based on difference from the standard correction approximate straight-line group information.

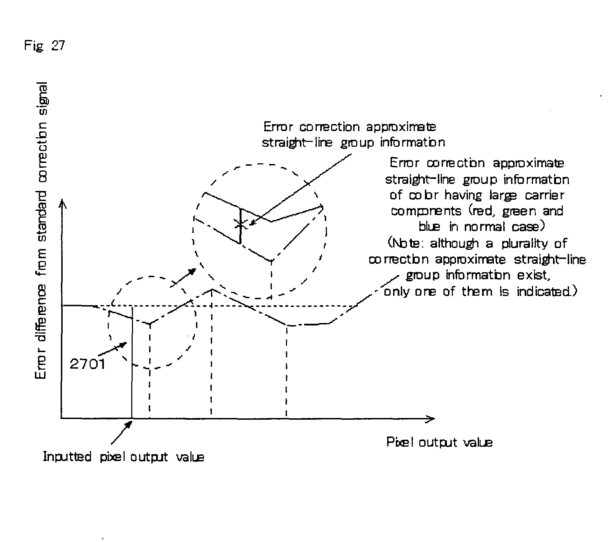

Fig. 27 is a diagram showing error correction approximate straight-line group information. As shown in Fig. 27, the error correction approximate straight-line group information is difference of pixel output values between the standard correction approximate straight-line group information and the correction approximate straight-line group information having large carrier components in Fig. 22. Here, similar to the first example, as to objects of three colors (e.g., red, green and blue), the error correction approximate straight-line group information, which are c1/c2>=wr_C1C2, c1/c2<wr_C1C2, c3/c4>=wr_C3C4, and c3/c4<wr_C3C4, are generated. In addition, similar to the first example, the correction approximate straight-line group information, the error correction approximate straight-line group information, and the ratio of carrier components are recorded in the non-volatile memory via the control micro computer 1808. Therefore, the one set of standard correction approximate straight-line group information, the plurality of error correction approximate straight-line group information, and the ratio of carrier components generated upon generating the respective straight-line group information are generated (the ratio is the same as that of the first example).
Subsequently, the case of normal photographing will be described. In the normal photographing, the control micro computer 1808 sets the correction approximate straight-line group information, the error correction approximate straight-line group information, and the ratios of carrier components in the horizontal direction, which have been stored in the non-volatile memory, to the gain correcting circuit previous to the photographing. The detecting circuit for carrier components 1812 and the gain correcting circuit 1809 are configured as shown in Fig. 26, and operate as follows. In the normal photographing, outputs in the right side of signals inputted from CCD are A/D converted, and are inputted to the detecting circuit for carrier components 1901. Here, as to the lines (C1) and (C2), c1/c2 is calculated as a detection result of carrier components, and as to the lines (C3) and (C4), c3/c4 is calculated as a detection result of carrier components. After that, the detection results of signals and carrier components are inputted to the gain correcting circuit 2602. The detection result of carrier components is inputted to the selecting circuit for error correction approximate straight-line group information 2603, so that the error correction approximate straight-line group information having the carrier components is selected. For example, detection result of carrier components indicates c1/c2>=wr_C1C2, the error correction approximate straight-line group information corresponding to the result is selected. This is inputted to the correcting circuit by means of error correction approximate straight-line group information 2605, and is used for error correction. At the same time, the ratio pr_C1C2, which corresponds to the error correction approximate straight-line group information, is selected. This is inputted to the calculating circuit for error correction amount by means of ratio of carrier components 2606, and is used for the calculation.
Meanwhile, the inputted signal is inputted to the correcting circuit by means of standard correction approximate straight-line group information (its carrier component is close to 0) 2604 and to the correcting circuit by means of error correction approximate straight-line group information 2605, and correction value and error correction value are calculated. As shown in reference numerals 2201 of Fig. 22 (the correction value calculated from the standard correction approximate straight-line group information is the same as that of the first example) and reference numerals 2701 of Fig. 27, according to the inputted pixel output value, correction value and error correction value are acquired from the correction approximate straight-line group information and the error correction approximate straight-line group information, respectively. The acquired error correction value is inputted to the calculating circuit for error correction amount by means of ratio of carrier components 2606, and the error correction amount is calculated. For example, assuming that in the case of $c1/c2 >= wr\_C1C2$, the detected ratio $c1/c2 = x\_ratio$, the error correction value calculated by the calculating circuit for error correction amount by means of ratio of carrier components 2606 is E, and the final correction value is F, the following formula is acquired.

$$F = E * (x\_ratio - wr\_C1C2)/(pr\_C1C2 - wr\_C1C2)$$

Note that the calculation of the correction value can be carried out by means of a coefficient K of the non-linear converting circuit described in the first example of the fifth embodiment. For example, assuming that in the case of $c1/c2 >= wr\_C1C2$, the detected ratio $c1/c2 = x\_ratio$, the error correction value calculated by the correcting circuit by means of error correction approximate straight-line group information 2605 is E, the coefficient of the non-linear converting circuit is K, output is F, and the final correction value is G, the following formula is acquired.

$$F = K * (x\_ratio - wr\_C1C2)/(pr\_C1C2 - wr\_C1C2)$$

$$G = F * E$$

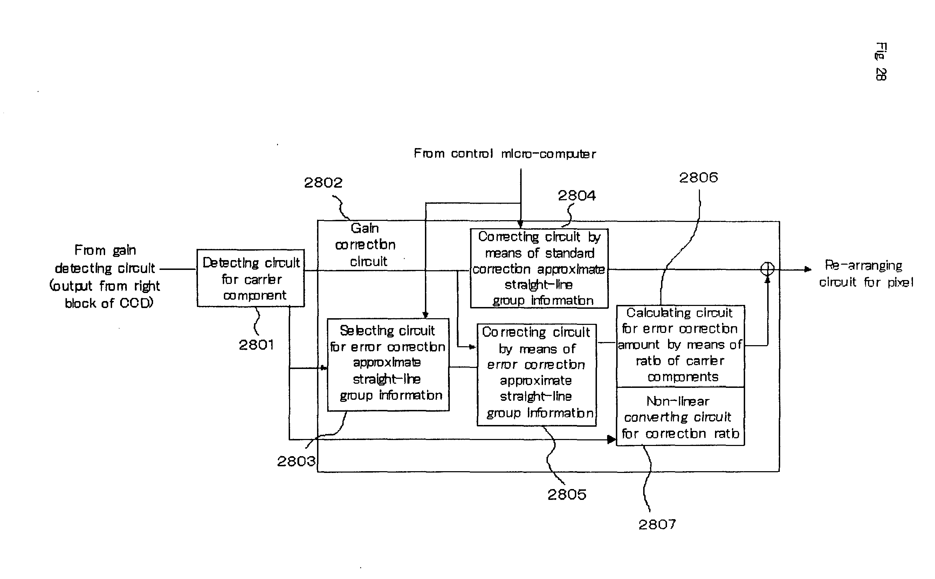

Fig. 28 is a functional block diagram showing the gain correcting circuit in the case of using the coefficient K of the non-linear converting circuit. Fig. 28 shows a detecting circuit for carrier components 2801, a gain correcting circuit 2802, a selecting circuit for error correction approximate straight-line group information (corresponding to the second selecting unit) 2803, a correcting circuit by means of standard correction approximate straight-line group information (corresponding to the second correcting unit) 2804, a correcting circuit by means of error correction approximate straight-line group information (corresponding to the second correcting unit) 2805, and a calculating circuit for error correction amount by means of ratio of carrier components (corresponding to the second correcting means according to output ratio) 2806, and a non-linear converting circuit 2807.

<Brief description of effects of sixth embodiment>

According to the sixth embodiment, it becomes possible to correct errors in hue between segmented blocks of a CCD of poor quality. The reason for this is that appropriate correction with respect to each pixel is possible by means of a plurality of correction approximate straight-line group information. In addition, by using error correction approximate straight-line group information, it becomes possible to reduce necessary memory amount for storing in comparison with the case of using only correction approximate straight-line group information. The reason for this is that the dynamic range of the error correction approximate straight-line group information can be smaller than that of the correction approximate straight-line group information.

**«Seventh embodiment»**

Hereinbelow, a seventh embodiment of the present invention will be described.

<Concept of the seventh embodiment>

Hereinbelow, a concept of the seventh embodiment will be described. The seventh embodiment is the correcting apparatus for multi-segment CCD according to the first embodiment, wherein the first correcting unit comprises first correcting means according to output ratio, which carries out the correction by using a ratio of pixel output value of a pixel, of which output is to be corrected, to pixel output value of a pixel, which is adjacent to the pixel, comprising a partial bypass processing unit, which carries out the correction without by means of the first correcting means according to output ratio if the pixel output value acquired by the acquiring unit for pixel output value is less than or equal to a predetermined value.

<Specifying of components>

Hereinbelow, components of the seventh embodiment will be described.

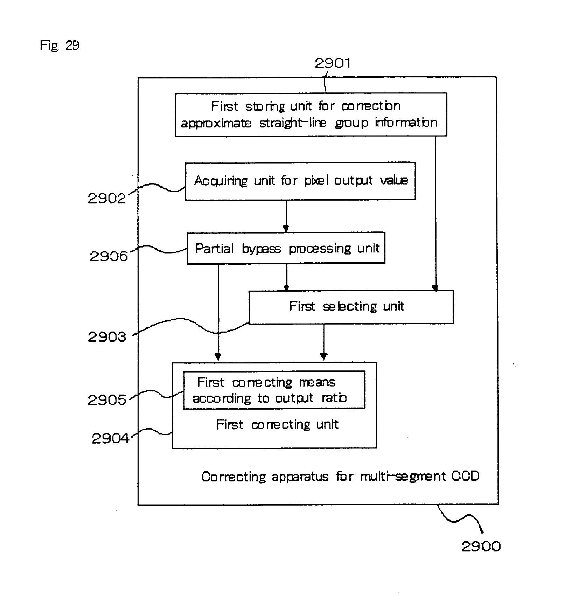

Fig. 29 is a functional block diagram of the seventh embodiment. A correcting apparatus for multi-segment CCD 2900 of the seventh embodiment comprises a first storing unit for correction approximate straight-line group information 2901, an acquiring unit for pixel output value 2902, a first selecting unit 2903, a first correcting unit 2904, and a partial bypass processing unit 2906. In addition, the first correcting unit comprises first correcting means according to output ratio 2905.

<Description of components>

The 'first storing unit for correction approximate straight-line group information', the 'acquiring unit for pixel output value', and the 'first selecting unit' are the same as those of the first embodiment, so that the description will be omitted.

(First correcting unit)

The 'first correcting unit' comprises first correcting means according to output ratio. Here, the 'first correcting means according to output ratio' carries out the correction by using a ratio of pixel output value of a pixel, of which output is to be corrected, to pixel output value of a pixel, which is adjacent to the pixel.

(Partial bypass processing unit)

The 'partial bypass processing unit' carries out the correction without by means of the first correcting means according to output ratio if the pixel output value acquired by the acquiring unit for pixel output value is less than or equal to a predetermined value.

**(Third example)**

Hereinbelow, a third example of the seventh embodiment will be described. As shown in the first example of the fifth embodiment, the correction value is calculated as follows. For example, assuming that in the case of $c1/c2 >= wr\_C1C2$, the detected ratio $c1/c2 = x\_ratio$, the correction value calculated from the standard correction approximate straight-line group information is A, the correction value calculated from the correction approximate straight-line group information having large carrier components is B, and the final correction value is D, the following formula is acquired.

$$D=(B-A)*(x\_ratio-wr\_C1C2)/(pr\_C1C2-wr\_C1C2)+A$$

However, the calculation of ratio of pixels becomes less accurate at low brightness. Therefore, in cases where the brightness is lower than a predetermined brightness, it is preferable that the correction value is fixed to a certain value of correction approximate straight-line group information. Here, as to right-and-left difference, it has been confirmed that the right-and-left difference stands out in cases where the ratio of carrier components is large. Therefore, in the case of a certain level of ratio and low brightness, calculation of the correction value according to the ratio is not carried out. Hereinbelow, the description will be made with reference to drawings.

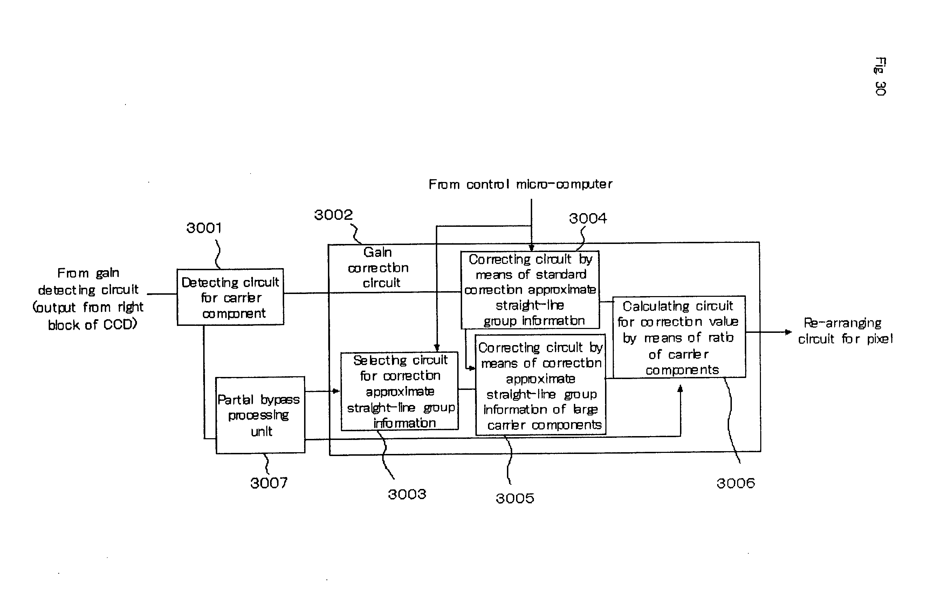

Fig. 30 is a functional block diagram showing the gain correcting circuit of the third example. Fig. 30 shows a detecting circuit for carrier components 3001, a gain correcting circuit 3002, a selecting circuit for correction approximate straight-line group information (corresponding to the first selecting unit) 3003, a correcting circuit by means of standard correction approximate straight-line group information (corresponding to the first correcting unit) 3004, a correcting circuit by means of correction approximate straight-line group information of large carrier components (corresponding to the first correcting unit) 3005, and a calculating circuit for correction value by means of ratio of carrier components (corresponding to the first correcting means according to output ratio) 3006, and a partial bypass processing circuit 3007. Here, in cases where the pixel output value inputted to the partial bypass processing circuit is less than or equal to a predetermined value, in Fig. 30, output of the calculating circuit for correction value by means of ratio of carrier components 3006 is the correction value D. The corrected signal is sent to the re-arranging circuit for pixel 1810 of Fig. 18, and is re-arranged in one line, and is sent to the CCD signal processing circuit 1811, so that YCrCb signal is generated.

<Process flow>

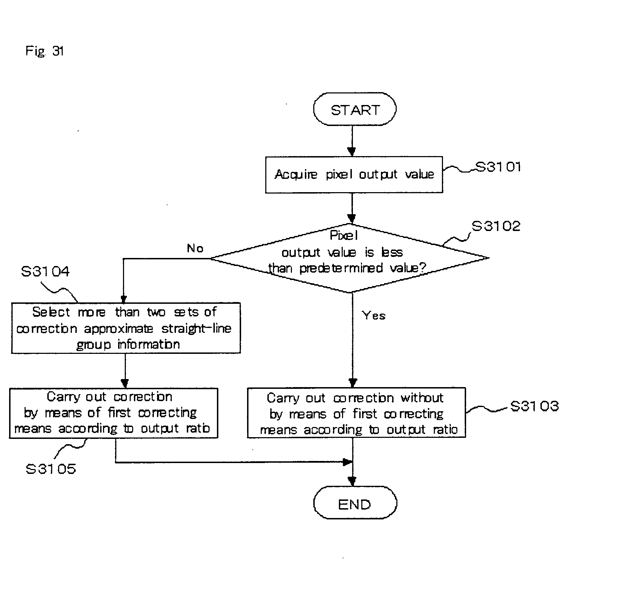

Fig. 31 is a flow chart of the seventh embodiment.

In the correcting apparatus for multi-segment reading CCD, at the outset, an acquiring step for pixel output value acquires a pixel output value of the multi-segment CCD (step S3101). Subsequently, a partial bypass processing step determines whether the pixel output value acquired by the acquiring step for pixel output value is less than or equal to a predetermined value, and if it is less than or equal to the predetermined value, step S3103 is carried out, and if not, step S3104 is carried out (step S3102). Subsequently, the partial bypass processing step carries out correction without by means of the first correcting means according to output ratio (step S3103). Subsequently, a first selecting step selects two or more sets of correction approximate straight-line group information from a plurality of correction approximate straight-line group information based on the pixel output value acquired by the acquiring step for pixel output value (step S3104). Subsequently, a first correcting step corrects the pixel output value by means of the two or more sets of correction approximate straight-line group information selected by the first selecting step by using the first correcting means according to output ratio (step S3105).

<Brief description of effects of seventh embodiment>

According to the seventh embodiment, the partial bypass processing unit is comprised, so that it becomes possible to carry out correction without by means of the first correcting means according to output ratio if the pixel output value acquired by the acquiring step for pixel output value is less than or equal to or equal to a predetermined value.

**<<Eighth embodiment>>**

Hereinbelow, an eighth embodiment of the present invention will be described.

<Concept of the eighth embodiment>

Hereinbelow, a concept of the eighth embodiment will be described. The eighth embodiment is the correcting apparatus for multi-segment CCD according to the first embodiment, comprising a storing unit for standard correction approximate straight-line group information, which stores one standard correction approximate straight-line group information, wherein if the pixel output value acquired by said acquiring unit for pixel output value is less than or equal to a predetermined value, the correction is carried out by means of the one standard correction approximate straight-line group information stored by the storing unit for standard correction approximate straight-line group information as a substitute for said two or more sets of correction approximate straight-line group information without by means of the first selecting unit.

<Specifying of components>

Hereinbelow, components of the eighth embodiment will be described.

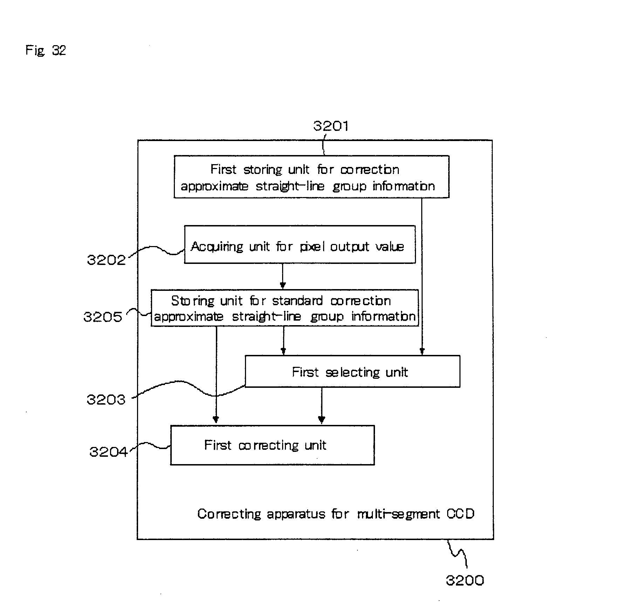

Fig. 32 is a functional block diagram of the eighth embodiment. A correcting apparatus for multi-segment CCD 3200 of the eighth embodiment comprises a first storing unit for correction approximate straight-line group information 3201, an acquiring unit for pixel output value 3202, a first selecting unit 3203, a first correcting unit 3204, and a storing unit for standard correction approximate straight-line group information 3205.

<Description of components>

The 'first storing unit for correction approximate straight-line group information', the 'acquiring unit for pixel output value, the 'first selecting unit', and the 'first correcting unit' are the same as those of the first embodiment, so that the description will be omitted.

(Storing unit for standard correction approximate straight-line group information)

The 'storing unit for standard correction approximate straight-line group information' 3205 stores standard correction approximate straight-line group information. Here, the 'standard correction approximate straight-line group information' is, for example, correction approximate straight-line group information of white, of which carrier components are close to 0. The correction method by means of the standard correction approximate straight-line group information is the same as the correction method by means of the correction approximate straight-line group information described in the first embodiment, so that the description will be omitted.

<Process flow>

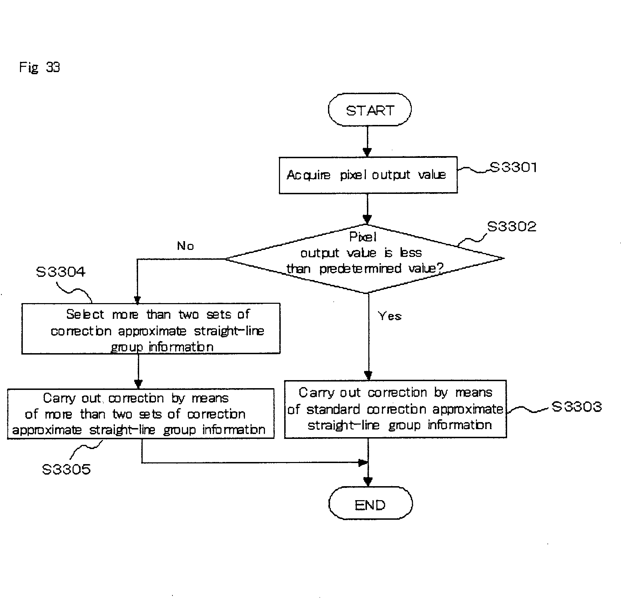

Fig. 33 is a flow chart of the eighth embodiment.

In the correcting apparatus for multi-segment reading CCD, at the outset, an acquiring step for pixel output value acquires a pixel output value of the multi-segment CCD (step S3301). Subsequently, a storing step for standard correction approximate straight-line group information determines whether the pixel output value acquired by the acquiring step for pixel output value is less than or equal to a predetermined value, and if it is less than or equal to the predetermined value, step S3303 is carried out, and if not, step S3304 is carried out (step S3302). Subsequently, the storing step for standard correction approximate straight-line group information carries out correction by means of the one standard correction approximate straight-line group information stored by the storing step for standard correction approximate straight-line group information as a substitute for said two or more sets of correction approximate straight-line group information without by means of the first selecting step if the pixel output value acquired by the acquiring step for pixel output value is less than or equal to a predetermined value (step S3303). Subsequently, a first selecting step selects two or more sets of correction approximate straight-line group information from a plurality of correction approximate straight-line group information based on the pixel output value acquired by the acquiring step for pixel output value (step S3304). Subsequently, a first correcting step corrects the pixel output value by means of the two or more sets of correction approximate straight-line group information selected by the first selecting step by using the first correcting means according to output ratio (step S3305).

<Brief description of effects of eighth embodiment>

According to the eighth embodiment, it becomes possible to carry out correction by means of the one standard correction approximate straight-line group information if the pixel output value acquired by the acquiring step for pixel output value is less than or equal to a predetermined value.

**«Ninth embodiment»**

Hereinbelow, a ninth embodiment of the present invention will be described.

<Concept of the ninth embodiment>

Hereinbelow, a concept of the ninth embodiment will be described. The ninth embodiment is the correcting apparatus for multi-segment CCD according to the second embodiment, wherein the second correcting unit comprises second correcting means according to output ratio, which carries out the correction by using a ratio of pixel output value of a pixel, of which output is to be corrected, to pixel output value of a pixel, which is adjacent to the pixel, comprising a partial bypass processing unit, which carries out the correction without by means of the second correcting means according to output ratio if the pixel output value acquired by the acquiring unit for pixel output value is less than or equal to a predetermined value.

<Specifying of components>

Hereinbelow, components of the ninth embodiment will be described.

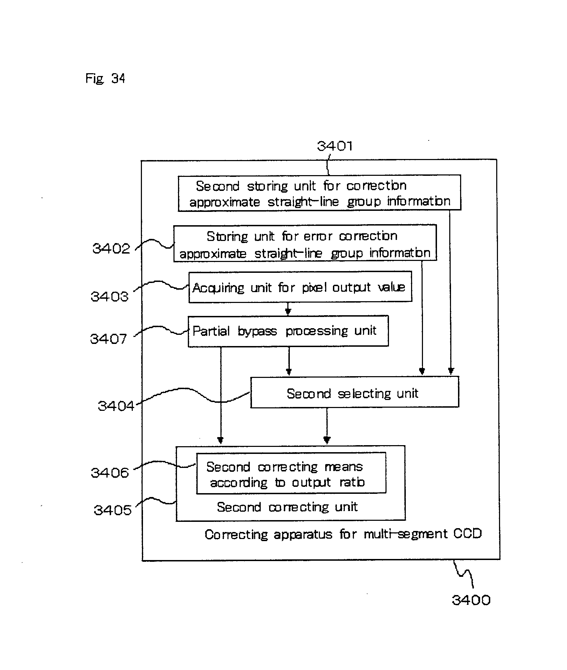

Fig. 34 is a functional block diagram of the ninth embodiment. A correcting apparatus for multi-segment CCD 3400 of the ninth embodiment comprises a second storing unit for correction approximate straight-line group information 3401, a storing unit for error correction approximate straight-line group information 3402, an acquiring unit for pixel output value 3403, a second selecting unit 3404, a second correcting unit 3405, and a partial bypass processing unit 3407. In addition, the second correcting unit comprises second correcting means according to output ratio 3406.

<Description of components>

The 'second storing unit for correction approximate straight-line group information', the 'storing unit for error correction approximate straight-line group information', the 'acquiring unit for pixel output value', and the 'second selecting unit' are the same as those of the second embodiment, so that the description will be omitted.

(Second correcting unit)

The 'second correcting unit' comprises second correcting means according to output ratio. Here, the 'second correcting means according to output ratio' carries out the correction by using a ratio of pixel output value of a pixel, of which output is to be corrected, to pixel output value of a pixel, which is adjacent to the pixel.

(Partial bypass processing unit)

The 'partial bypass processing unit' carries out the correction without by means of the second correcting means according to output ratio if the pixel output value acquired by the acquiring unit for pixel output value is less than or equal to a predetermined value.

**(Fourth example)**

Hereinbelow, a fourth example of the ninth embodiment will be described. As shown in the second example of the sixth embodiment, the correction value is calculated as follows. For example, assuming that in the case of c1/c2>=wr_ C1C2, the detected ratio c1/c2= x_ratio, the error correction value calculated by the calculating circuit for error correction amount by means of ratio of carrier components 2606 is E, and the final error correction value is F, the following formula is acquired.

$$F=E_*(x\_ratio-wr\_C1C2)/(pr\_C1C2-wr\_C1C2)$$

However, the calculation of ratio of pixels becomes less accurate at low brightness. Therefore, in cases where the brightness is lower than a predetermined brightness, it is preferable that the error correction value is fixed to a certain value of error correction approximate straight-line group information. Here, as to right-and-left difference, it has been confirmed that the right-and-left difference stands out in cases where the ratio of carrier components is large. Therefore, in the case of a certain level of ratio and low brightness, calculation of the error correction value according to the ratio is not carried out. Hereinbelow, the description will be made with reference to drawing.

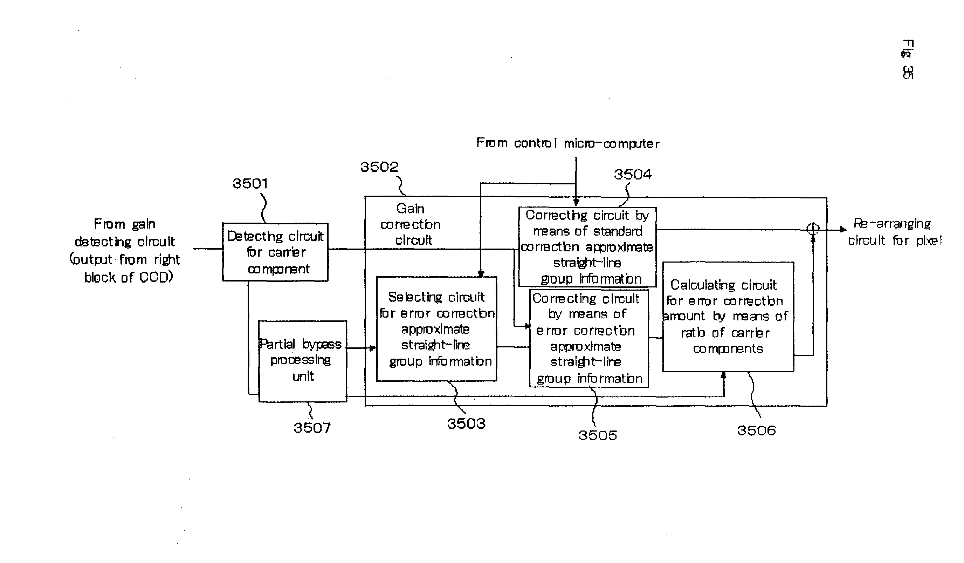

Fig. 35 is a functional block diagram showing the gain correcting circuit of the fourth example. Fig. 35 shows a detecting circuit for carrier components 3501, a gain correcting circuit 3502, a selecting circuit for error correction approximate straight-line group information (corresponding to the second selecting unit) 3503, a correcting circuit by means of standard correction approximate straight-line group information (corresponding to the second correcting unit) 3504, a correcting circuit by means of error correction approximate straight-line group information of large carrier components (corresponding to the second correcting unit) 3505, and a calculating circuit for error correction amount by means of ratio of carrier components (corresponding to the second correcting means according to output ratio) 3506, and a partial bypass processing circuit 3507. Here, in cases where the pixel output value inputted to the partial bypass processing circuit is less than or equal to a predetermined value, in Fig. 35, output of the calculating circuit for error correction amount by means of ratio of carrier components 3506 is the correction value F. The corrected signal is sent to the re-arranging circuit for pixel 1810 of Fig. 18, and is re-arranged in one line, and is sent to the CCD signal processing circuit 1811, so that YCrCb signal is generated.

<Process flow>

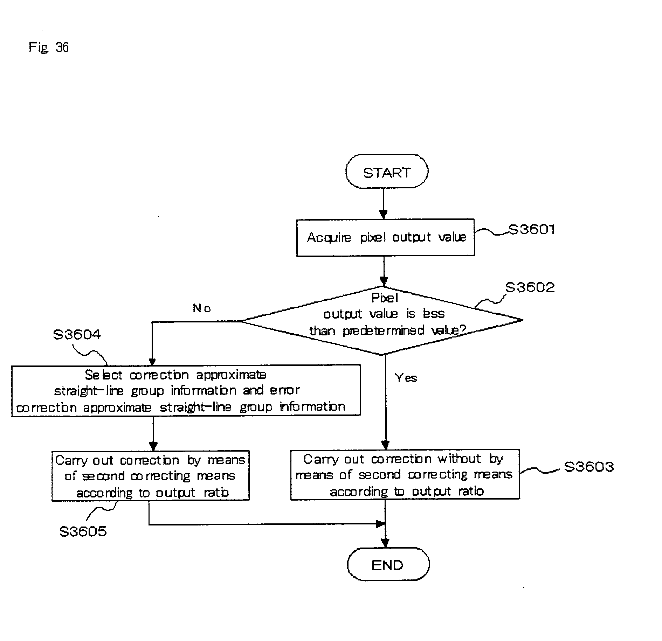

Fig. 36 is a flow chart of the ninth embodiment.
In the correcting apparatus for multi-segment reading CCD, at the outset, an acquiring step for pixel output value acquires a pixel output value of the multi-segment CCD (step S3601). Subsequently, a partial bypass processing step determines whether the pixel output value acquired by the acquiring step for pixel output value is less than or equal to a predetermined value, and if it is less than or equal to the predetermined value, step S3603 is carried out, and if not, step S3604 is carried out (step S3602). Subsequently, the partial bypass processing step carries out correction without by means of the second correcting means according to output ratio (step S3603). Subsequently, a second selecting step selects the correction approximate straight-line group information based on the pixel output value acquired by the acquiring step for pixel output value, and further selects the error correction approximate straight-line group information based on the pixel output value acquired by the acquiring step for pixel output value (step S3604). Subsequently, a second correcting step corrects the pixel output value by means of the correction approximate straight-line group information and the error correction approximate straight-line group information, which have been selected by the second selecting step (step S3605).

<Brief description of effects of ninth embodiment>

According to the ninth embodiment, the partial bypass processing unit is comprised, so that it becomes possible to carry out correction without by means of the second correcting means according to output ratio if the pixel output value acquired by the acquiring step for pixel output value is less than or equal to a predetermined value.

**«Tenth embodiment»**

Hereinbelow, a tenth embodiment of the present invention will be described.

<Concept of the tenth embodiment>

Hereinbelow, a concept of the tenth embodiment will be described. The tenth embodiment is the correcting apparatus for multi-segment CCD according to any one of the first, third, fifth, seventh, and eighth embodiments, comprising a first gain attenuating unit, which is arranged subsequent to the first correcting unit. In addition, the tenth embodiment is the correcting apparatus for multi-segment CCD according to any one of the first, third, fifth, seventh, and eighth embodiments, comprising a first gain amplifying unit, which is arranged precedential to the acquiring unit for pixel output value arranged precedential to the first correcting unit, and a first gain attenuating unit, which is arranged subsequent to the first correcting unit.

<Specifying of components>

Hereinbelow, components of the tenth embodiment will be described.

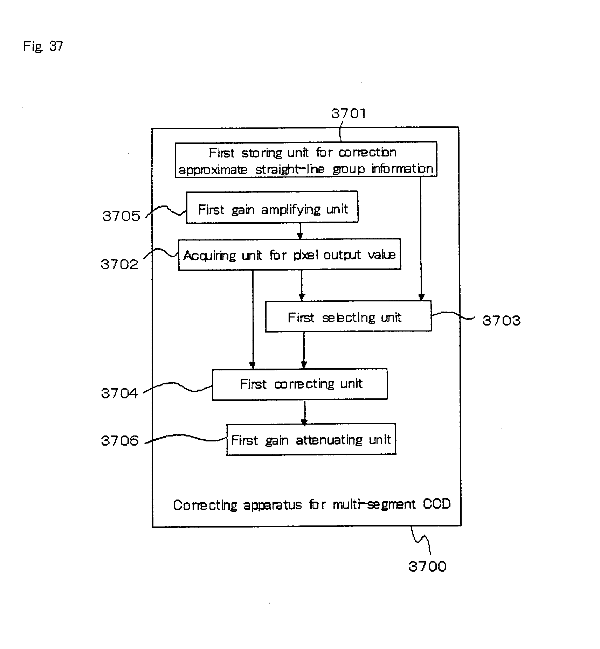

Fig. 37 is a functional block diagram of the tenth embodiment. A correcting apparatus for multi-segment CCD 3700 of the tenth embodiment comprises a first storing unit for correction approximate straight-line group information 3701, an acquiring unit for pixel output value 3702, a first selecting unit 3703, a first correcting unit 3704, and a first gain amplifying unit 3705, and a first gain attenuating unit 3706.

<Description of components>

The 'first storing unit for correction approximate straight-line group information', the 'acquiring unit for pixel output value', and the 'first selecting unit 3703, a first correcting unit' are the same as those of the first embodiment, so that the description will be omitted.

(First gain amplifying unit)

The 'first gain amplifying unit' is arranged precedential to the acquiring unit for pixel output value arranged precedential to the first correcting unit, and amplifies the pixel output value. The first gain amplifying unit amplifies the pixel output value, so that it becomes possible to acquire the gain difference between the segmented blocks in high resolution. Examples of magnification of the amplification by the first gain amplifying unit include 4 times or 8 times.

(Fain attenuating unit)

The 'first gain attenuating unit' is arranged subsequent to the first correcting unit, and attenuates the pixel output value. By the attenuation, it becomes possible to make the amplified pixel output values to appropriate values. Examples of magnification of the attenuation by the first gain attenuating unit include 1/2 times or 1/4 times.

**(Fifth example)**

Hereinbelow, a fifth example of the tenth embodiment will be described. In the fifth example, the correcting apparatus for multi-segment CCD in the case of 2-segment CCD will be described.
In the case of adjusting gain of the entire correcting apparatus for multi-segment CCD, the adjustment is carried out by a combination of magnifications of the first gain amplifying unit and of the first gain attenuating unit. For example, in the case of amplifying the entire gain up to 4 times, the adjustment is carried out as follows: Normally, the magnification of the first gain amplifying unit is set to 4 times in the case of gain amplification. Meanwhile, in the present invention, the magnification of the first gain amplifying unit is set to 8 times.

(In generating correction approximate straight-line group information)

In generating correction approximate straight-line group information, the magnification of the first gain amplifying unit is set to 8 times, so that the correction approximate straight-line group information is generated. (According to the magnification of the first gain amplifying unit, several correction approximate straight-line group information are generated.)

(In correction: first step)

In the correction, the magnification of the first gain amplifying unit is set to 8 times, and the magnification of the first gain attenuating unit is set to 1/2 times.

(In correction: second step)

In cases where the magnification of the first gain amplifying unit is continuously changed, the magnification of the first gain attenuating unit is set so as to decrease from 1/2 times (in increasing, the right-and-left gain difference can be acquired in high resolution). In this method, although bit resolution decreases, the right-and-left difference becomes smaller.

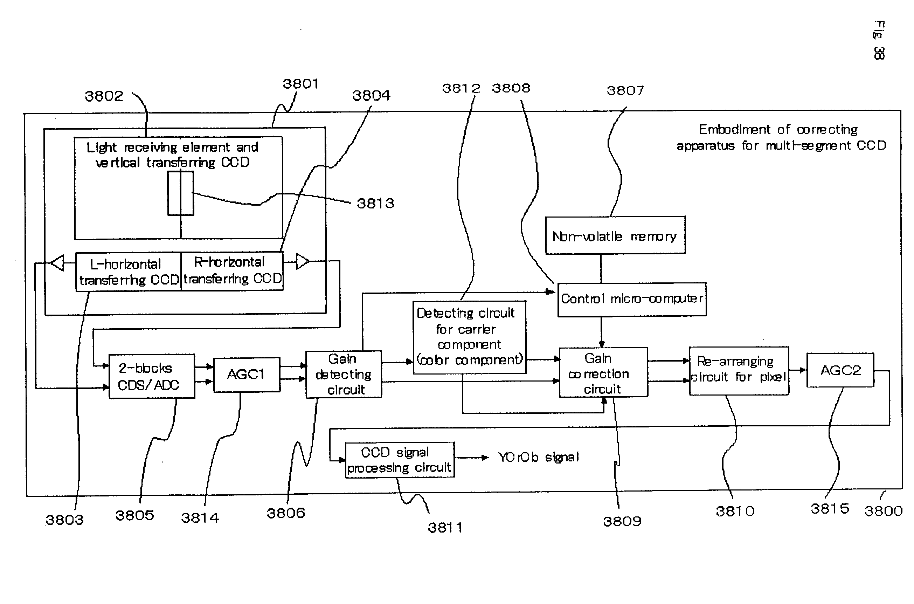

Fig. 38 is a functional block diagram of the correcting apparatus for 2-segment CCD of the fifth example. The correcting apparatus for multi-segment CCD of the fifth example comprises a 2-segment reading CCD 3801, a 2-block CDS/ADC circuit 3805, a gain detecting circuit (corresponding to the acquiring unit for pixel output value) 3806, a non-volatile memory (e.g., EEPROM, corresponding to the first storing unit for correction approximate straight-line group information) 3807, a control microcomputer 3808, a gain correcting circuit (corresponding to the first selecting unit and to the first correcting unit) 3809, a re-arranging circuit for pixel 3810, a CCD signal processing circuit 3811, a detecting circuit for carrier components 3812, a AGC1 3814 (corresponding to the first gain amplifying unit), and a AGC2 3815 (corresponding to the first gain attenuating unit). In the tenth embodiment, the AGC1 is added subsequent to the 2-block CDS/ADC circuit of the first example of the fifth embodiment, so that gain amplification (e.g., 8 times) is carried out, and after the gain amplification, the AGC2 is added, so that gain attenuation (e.g., 1/2 times) is appropriately carried out. According to this configuration, by increasing the gain immediately after the CDS/ADC, it becomes possible to acquire brightness. Further, in the correction by the correcting apparatus for 2-segment CCD, by increasing the magnification of amplification, it becomes possible to acquire the right-and-left difference in high resolution.

**(Sixth example)**

Hereinbelow, a sixth example of the tenth embodiment will be described. In the sixth example, the correcting apparatus for multi-segment CCD in the case of 4-segment CCD will be described.

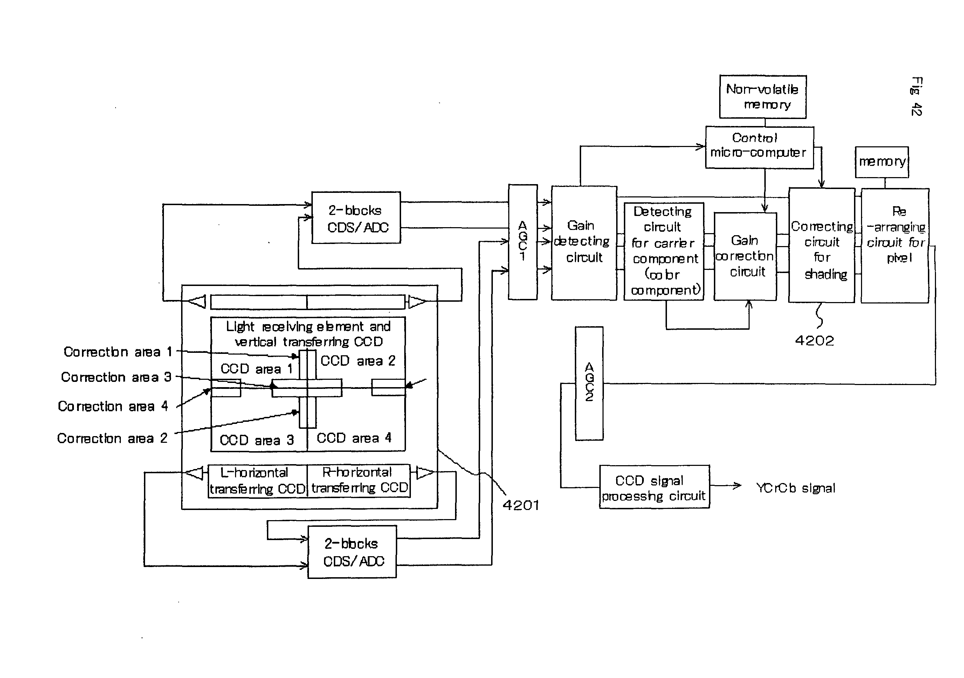

Fig. 42 shows a CCD used for the correcting apparatus for 4-segment CCD. The configuration excluding the 4-segment CCD is the same as that of the fifth embodiment. In the correction of the 4-segment CCD, correction dependent on a color of each pixel is carried out similar to the correction of the 2-segment CCD. The difference from the correction of the 2-segment CCD is that the correction is repeated four times. Hereinbelow, the correction process will be described. Note that a CCD 4201 is segmented into CCD area 1, CCD area 2, CCD area 3, and CCD area 4. Further, in Fig. 42, correction area 1, correction area 2, correction area 3, and correction area 4 are indicated as the central area used for generating correction approximate straight-line group information.

(First step)

As to the CCD areas 1 and 2, correction is carried out by means of correction area 1. In this case, the correction of CCD area 2 is carried out according to CCD area 1.

(Second step)

As to the CCD areas 3 and 4, correction is carried out by means of correction area 2. In this case, the correction of CCD area 4 is carried out according to CCD area 3.

(Third step)

By means of correction area 3, correction of the CCD areas 3 and 4 (CCD area 4 has already been corrected according to CCD area 3) is carried out according to CCD areas 1 and 2 (CCD area 2 has already been corrected according to CCD area 1).

(Fourth step)

At this point, the correction should have been completed. However, there is a possibility that as to correction area 3, upper and lower portions fit with each other, however, as to the correction areas 4 and 5, upper and lower portions do not fit with each other. In this case, distortion occurs in a line connecting the correction areas 4, 3 and 5. The distortion is corrected by means of the shading correction circuit 4202.

<Process flow>

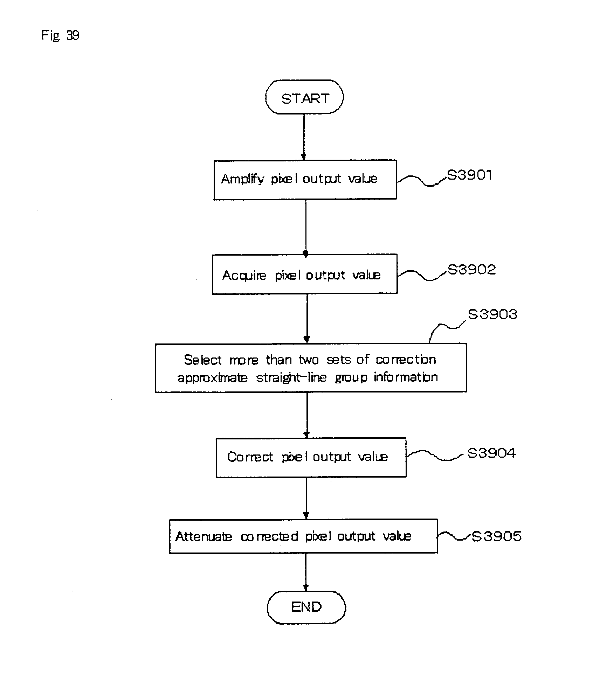

Fig. 39 is a flow chart of the tenth embodiment.

In the correcting apparatus for multi-segment reading CCD, at the outset, a first gain amplifying step amplifies the pixel output value of the multi-segment CCD (step S3901). Subsequently, an acquiring step for pixel output value acquires a pixel output value of the multi-segment CCD (step S3902). Subsequently, a first selecting step selects two or more sets of correction approximate straight-line group information from a plurality of correction approximate straight-line group information based on the pixel output value acquired by the acquiring step for pixel output value (step S3903). Subsequently, a first correcting step corrects the pixel output value by means of the two or more sets of correction approximate straight-line group information selected by the first selecting step (step S3904). Subsequently, a first gain attenuating step corrects the corrected pixel output value (step S3905).

<Brief description of effects of tenth embodiment>

According to the eleventh embodiment, the first gain amplifying unit is comprised, so that it becomes possible to acquire the gain difference between the segmented blocks in high resolution. In addition, the first gain attenuating unit is comprised, so that it becomes possible to attenuate the corrected pixel output value to the appropriate value.

**<<Eleventh embodiment>>**

Hereinbelow, an eleventh embodiment of the present invention will be described.

<Concept of the eleventh embodiment>

Hereinbelow, a concept of the eleventh embodiment will be described. The eleventh embodiment is the correcting apparatus for multi-segment CCD according to any one of the second, fourth, sixth, and tenth embodiments, comprising a second gain attenuating unit, which is arranged subsequent to the second correcting unit. In addition, the eleventh embodiment is the correcting apparatus for multi-segment CCD according to any one of the second, fourth, sixth, and ninth embodiments, comprising a second gain amplifying unit, which is arranged precedential to the acquiring unit for pixel output value arranged precedential to the second correcting unit, and a second gain attenuating unit, which is arranged subsequent to the second correcting unit.

<Specifying of components>

Hereinbelow, components of the tenth embodiment will be described.

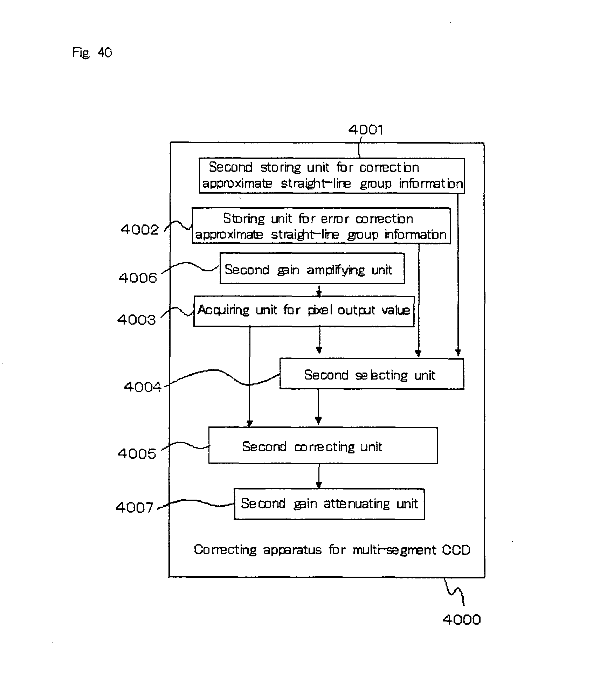

Fig. 40 is a functional block diagram of the tenth embodiment. A correcting apparatus for multi-segment CCD 4000 of the tenth embodiment comprises a second storing unit for correction approximate straight-line group information 4001, a storing unit for error correction approximate straight-line group information 4002, an acquiring unit for pixel output value 4003, a second selecting unit 4004, a second correcting unit 4005, and a second gain amplifying unit 4006, and a second gain attenuating unit 4007. Note that the second gain amplifying unit may not be comprised.

<Description of components>

The 'second storing unit for correction approximate straight-line group information', the 'storing unit for error correction approximate straight-line group information', the 'acquiring unit for pixel output value', and the 'second selecting unit, a second correcting unit' are the same as those of the second embodiment, so that the description will be omitted.

(Second gain amplifying unit)

The 'second gain amplifying unit' is arranged precedential to the acquiring unit for pixel output value arranged precedential to the second correcting unit, and amplifies the pixel output value. The second gain amplifying unit amplifies the pixel output value, so that it becomes possible to acquire the gain difference between the segmented blocks in high resolution. Examples of magnification of the amplification by the second gain amplifying unit include 4 times or 8 times.

(Second gain attenuating unit)

The 'second gain attenuating unit' is arranged subsequent to the second correcting unit, and attenuates the pixel output value. By the attenuation, it becomes possible to make the amplified pixel output values to appropriate values. Examples of magnification of the attenuation by the second gain attenuating unit include 1/2 times or 1/4 times.
In the case of adjusting gain of the entire correcting apparatus for multi-segment CCD, the adjustment is carried out by a combination of magnifications of the second gain amplifying unit and of the second gain attenuating unit. For example, in the case of amplifying the entire gain up to 4 times, the adjustment is carried out as follows. Normally, the magnification of the second gain amplifying unit is set to 4 times in the case of gain amplification. Meanwhile, in the present invention, the magnification of the second gain amplifying unit is set to 8 times.

(In generating correction approximate straight-line group information)

In generating (error) correction approximate straight-line group information, the magnification of the second gain amplifying unit is set to 8 times, so that the correction approximate straight-line group information is generated. (According to the magnification of the second gain amplifying unit, error correction approximate straight-line group information is generated.)

(In correction: first step)

In the correction, the magnification of the second gain amplifying unit is set to 8 times, and the magnification of the second gain attenuating unit is set to 1/2 times.

(In correction: second step)

In cases where the magnification of the second gain amplifying unit is continuously changed, the magnification of the second gain attenuating unit is set so as to decrease from 1/2 times (in increasing, the right-and-left gain difference can be acquired in high resolution). In this method, although bit resolution decreases, the right-and-left difference becomes smaller.
Note that a concrete example of the functional block diagram of the correcting apparatus for multi-segment CCD of the eleventh embodiment is the same as that of the fifth example of the tenth embodiment, so that the description will be omitted.

<Process flow>

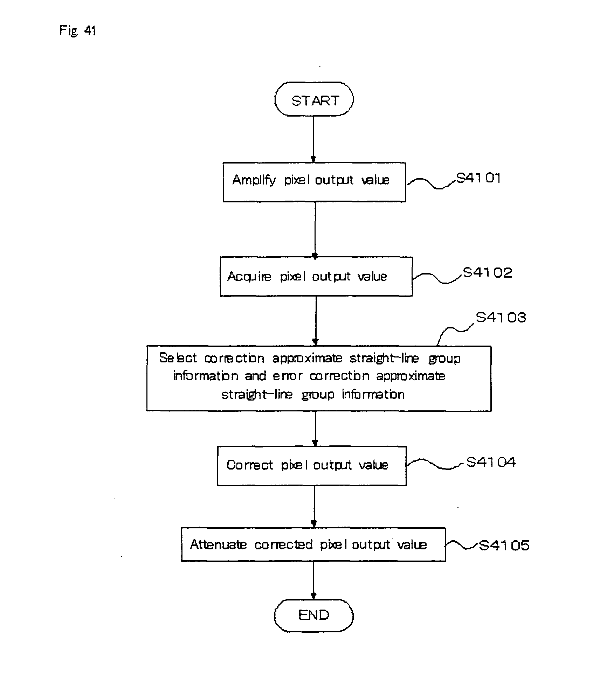

Fig. 41 is a flow chart of the eleventh embodiment.
In the correcting apparatus for multi-segment reading CCD, at the outset, a second gain amplifying step amplifies the pixel output value of the multi-segment CCD (step S4101). Subsequently, an acquiring step for pixel output value acquires a pixel output value of the multi-segment CCD (step S4102). Subsequently, a second selecting step selects correction approximate straight-line group information based on the pixel output value acquired by the acquiring step for pixel output value, and further selects error correction approximate straight-line group information based on the pixel output value acquired by the acquiring step for pixel output value (step S4103). Subsequently, a second correcting step corrects the pixel output value by means of the correction approximate straight-line group information and the error correction approximate straight-line group information, which have been selected by the second selecting step (step S4104). Subsequently, a second gain attenuating step corrects the corrected pixel output value (step S4105).

<Brief description of effects of eleventh embodiment>

According to the eleventh embodiment, the second gain amplifying unit is comprised, so that it becomes possible to acquire the gain difference between the segmented blocks in high resolution. In addition, the second gain attenuating unit is comprised, so that it becomes possible to attenuate the corrected pixel output value to the appropriate value.

**Industrial Applicability**

The present invention is applicable to the correcting apparatus and method for multi-segment reading CCD acquiring gains of output lines in a camera using multi-segment reading CCD

**Claims**

1. A correcting apparatus for multi-segment CCD, comprising:

   a first storing unit for correction approximate straight-line group information, which stores a plurality of correction approximate straight-line group information for correcting output difference between segment reading blocks of a multi-segment CCD;
   an acquiring unit for pixel output value, which acquires a pixel output value of the multi-segment CCD;
   a first selecting unit, which selects two or more sets of correction approximate straight-line group information from a plurality of correction approximate straight-line group information stored by said first storing unit for correction approximate straight-line group information based on the pixel output value acquired by said acquiring unit for pixel output value; and
   a first correcting unit, which corrects said pixel output value by means of the two or more sets of correction approximate straight-line group information selected by said first selecting unit.

2. A correcting apparatus for multi-segment CCD, comprising:

   a second storing unit for correction approximate straight-line group information, which stores a plurality of correction approximate straight-line group information for correcting output difference between segment reading blocks of a multi-segment CCD;
   a storing unit for error correction approximate straight-line group information, which stores a plurality of correction approximate straight-line group information for correcting output difference between segment reading blocks of a multi-segment CCD;
   an acquiring unit for pixel output value, which acquires a pixel output value of the multi-segment CCD;
   a second selecting unit, which selects correction approximate straight-line group information from a plurality of correction approximate straight-line group information stored by said second storing unit for correction approximate straight-line group information based on the pixel output value acquired by said acquiring unit for pixel output value, and further selects error correction approximate straight-line group information stored by said storing unit for error correction approximate straight-line group information based on the pixel output value acquired by said acquiring unit for pixel output value; and
   a second correcting unit, which corrects said pixel output value by means of the correction approximate straight-line group information and the error correction approximate straight-line group information selected by said second selecting unit.

3. The correcting apparatus for multi-segment CCD according to Claim 1, wherein
   said first selecting unit carries out said selection based on a ratio of pixel output value of a pixel, of which output is to be corrected, to pixel output value of a pixel, which is adjacent to the pixel.

4. The correcting apparatus for multi-segment CCD according to Claim 2, wherein
   said second selecting unit carries out said selection based on a ratio of pixel output value of a pixel, of which output is to be corrected, to pixel output value of a pixel, which is adjacent to the pixel.

5. The correcting apparatus for multi-segment CCD according to Claim 1, wherein
   said first correcting unit comprises
   first correcting means according to output ratio, which carries out said correction by using a ratio of pixel output value of a pixel, of which output is to be corrected, to pixel output value of a pixel, which is adjacent to the pixel.

6. The correcting apparatus for multi-segment CCD according to Claim 2, wherein
   said second correcting unit comprises
   second correcting means according to output ratio, which carries out said correction by using a ratio of pixel output value of a pixel, of which output is to be corrected, to pixel output value of a pixel, which is adjacent to the pixel.

7. The correcting apparatus for multi-segment CCD according to Claim 1, wherein
   said first correcting unit comprises
   first correcting means according to output ratio, which carries out said correction by using a ratio of pixel output value of a pixel, of which output is to be corrected, to pixel output value of a pixel, which is adjacent to the pixel, comprising:

a partial bypass processing unit, which carries out said correction without by means of the first correcting means according to output ratio if the pixel output value acquired by said acquiring unit for pixel output value is less than or equal to a predetermined value.

8. The correcting apparatus for multi-segment CCD according to Claim 1, comprising:

a storing unit for standard correction approximate straight-line group information, which stores one standard correction approximate straight-line group information, wherein
if the pixel output value acquired by said acquiring unit for pixel output value is less than or equal to a predetermined value, the correction is carried out by means of the one standard correction approximate straight-line group information stored by the storing unit for standard correction approximate straight-line group information as a substitute for said two or more sets of correction approximate straight-line group information without by means of the first selecting unit.

9. The correcting apparatus for multi-segment CCD according to Claim 2, wherein
said second correcting unit comprises
second correcting means according to output ratio, which carries out said correction by using a ratio of pixel output value of a pixel, of which output is to be corrected, to pixel output value of a pixel, which is adjacent to the pixel, comprising:

a partial bypass processing unit, which carries out said correction without by means of the second correcting means according to output ratio if the pixel output value acquired by said acquiring unit for pixel output value is less than or equal to a predetermined value.

10. The correcting apparatus for multi-segment CCD according to any one of Claims 1, 3, 5, 7, and 8, comprising:

a first gain attenuating unit, which is arranged subsequent to said first correcting unit.

11. The correcting apparatus for multi-segment CCD according to any one of Claims 2, 4, 6, and 9, comprising:

a second gain attenuating unit, which is arranged subsequent to said second correcting unit.

12. The correcting apparatus for multi-segment CCD according to any one of Claims 1, 3, 5, 7, and 8, comprising:

a first gain amplifying unit, which is arranged precedential to the acquiring unit for pixel output value arranged precedential to said first correcting unit; and
a first gain attenuating unit, which is arranged subsequent to said first correcting unit.

13. The correcting apparatus for multi-segment CCD according to any one of Claims 2, 4, 6, and 9, comprising:

a second gain amplifying unit, which is arranged precedential to the acquiring unit for pixel output value arranged precedential to said second correcting unit; and
a second gain attenuating unit, which is arranged subsequent to said second correcting unit.

14. A correcting method, which is for carrying out correction of output difference between segment reading blocks in a multi-segment CCD in a camera provided with the multi-segment CCD by means of two or more sets of correction approximate straight-line group information, which are used for one type of pixel in said multi-segment CCD.

15. A correcting method, which is for carrying out correction of output difference between segment reading blocks in a multi-segment CCD in a camera provided with the multi-segment CCD by means of one or more sets of correction approximate straight-line group information and one or more sets of error correction approximate straight-line group information, which are used for one type of pixel in said multi-segment CCD.

16. The correcting method according to Claim 14, wherein an output ratio of a pixel output value of a pixel, which is a target for using correction approximate straight-line group information, to a pixel output value of an adjacent pixel to said pixel is used for determining correction approximate straight-line group information from the two or more sets of correction approximate straight-line group information.

17. The correcting method according to Claim 15, wherein the output ratio is used for determining error correction approximate straight-line group information from the one or more sets of correction approximate straight-line group information after the correction by means of the correction approximate straight-line group information.

18. The correcting method according to Claim 14, wherein
the correction is carried out by means of said output ratio based on two or more sets of correction approximate straight-line group information.

19. The correcting method according to Claim 15, wherein the correction is carried out by means of said output ratio based on one or more sets of error correction approximate straight-line group information after the correction based on the correction approximate straight-line group information.

20. The correcting method according to Claim 18, wherein
if the output value of the pixel to be corrected is less than or equal to a predetermined value, calculation of said output ratio is stopped, and a correction value of a particular correction approximate straight-line group information is used.

21. The correcting method according to Claim 19, wherein
if the output value of the pixel to be corrected is less than or equal to a predetermined value, calculation of said output ratio is stopped, and a correction value of a particular correction approximate straight-line group information is used

22. A recording apparatus for digital image, comprising:

the correcting apparatus for multi-segment CCD according to Claim 1 or 2.

Fig 1

< First storing unit for correction approximate straight-line group information 0101 >

Pixel output value

Right-and-left gain difference

< First selecting unit 0103 >

Pixel output value

Right-and-left gain difference

(C1: Mg+Ye)

Correcting apparatus for multi-segment CCD

0100

< Acquiring unit for pixel output value 0102 >

(Pixel output value a)

| | | | |
|---|---|---|---|
| Mg + Ye | G + Cy | Mg + Cy | G + Cy |
| G + Ye | Mg + Ye | G + Ye | Mg + Cy |

C1:Mg + Ye
C2:G + Cy
C3:Mg + Cy
C4:G + Ye

< First correcting unit 0104 >

Pixel output value

Pixel output value a

Right-and-left gain difference

Correction value B

(C1:Mg+Ye)

Fig. 2

| | Correcting apparatus for multi-segment CCD |
|---|---|
| 0201 | First storing unit for correction approximate straight-line group information |
| 0202 | Acquiring unit for pixel output value |
| 0203 | First selecting unit |
| 0204 | First correcting unit |

0200

Fig. 3

Left-central pixel area
0303

Right-central pixel area
0304

| | | | | | | | | | | | | |
| --- | --- | --- | --- | --- | --- | --- | --- | --- | --- | --- | --- | --- |
| | | | | | | | | | | | | |
| | | | | (A1) | (A2) | | | (A1) | (A2) | | | |
| | | | | (A4) | (A3) | | | (A4) | (A3) | | | |
| | | | | | | | | | | | | |

L – CCD
0301

R – CCD
0302

2-segment CCD

0300

Fig. 4

Fig 5

Correction
approximate
straight-line group
information of green

Correction
approximate
straight-line group
information of blue

Correction
approximate
straight-line group
information of white

Correction
approximate
straight-line group
information of red

Right-and-left gain difference

Pixel output value

Fig. 6

Target pixel
0602

Unit of color expression
0601

| | (A2) | (A1) | (A2) | (A1) | (A2) | (A1) | (A2) | (A1) | (A2) | | |
|---|---|---|---|---|---|---|---|---|---|---|---|
| | (A3) | (A4) | (A3) | (A4) | (A3) | (A4) | (A3) | (A4) | (A3) | | |
| | (A2) | (A1) | (A2) | (A1) | (A2) | (A1) | (A2) | (A1) | (A2) | | |
| | (A3) | (A4) | (A3) | (A4) | (A3) | (A4) | (A3) | (A4) | (A3) | | |
| | (A2) | (A1) | (A2) | (A1) | (A2) | (A1) | (A2) | (A1) | (A2) | | |
| | | | | | | | | | | | |

Adjacent pixel (next to target pixel)
0603

Adjacent pixel
0604

CCD
0600

Fig. 7

Target pixel
0702

Adjacent pixel
0703

Unit of color expression
0701

| | (A 2) | (A 1) | (A 2) | (A 1) | (A 2) | (A 1) | (A 2) | (A 1) | (A 2) | | |
| (A 3) | (A 4) | (A 3) | (A 4) | (A 3) | (A 4) | (A 3) | (A 4) | (A 3) | | |
| (A 2) | (A 1) | (A 2) | (A 1) | (A 2) | (A 1) | (A 2) | (A 1) | (A 2) | | |
| (A 3) | (A 4) | (A 3) | (A 4) | (A 3) | (A 4) | (A 3) | (A 4) | (A 3) | | |
| (A 2) | (A 1) | (A 2) | (A 1) | (A 2) | (A 1) | (A 2) | (A 1) | (A 2) | | |

CCD
0700

Filtering
(for (A2))
0705

Filtering
(for (A1))
0704

Calculation
of ratio
a1 /a2
0706

Fig 6

Fig 9

START

Acquire pixel output value                                    S0901

Select more than two sets of correction
approximate straight-line group information          S0902

Correct pixel output value                                    S0903

END

Fig. 10

Fig. 11

1101 — Second storing unit for correction approximate straight-line group information

1102 — Storing unit for error correction approximate straight-line group information

1103 — Acquiring unit for pixel output value

1104 — Second selecting unit

1105 — Second correcting unit

Correcting apparatus for multi-segment CCD

1100

Fig. 12

Fig 13

Fig 14

Right-and-left gain difference

Correction approximate straight-line group information of white

G1

a

Pixel output value

Fig. 15

Error difference from standard correction approximate straight-line group information

Error correction approximate straight-line group information of green

Error correction approximate straight-line group information of red

Error correction approximate straight-line group information of blue

gi

a

Pixel output value

Fig. 16

```
                    ┌─────────┐
                    │  STRAT  │
                    └────┬────┘
                         │
                         ▼
        ┌──────────────────────────────┐
        │   Acquire pixel output value │ ～S1601
        └──────────────┬───────────────┘
                       │
                       ▼
    ┌───────────────────────────────────────┐
    │ Select correction approximate          │
    │ straight-line group information and     │ ～S1602
    │ error correction approximate            │
    │ straight-line group information         │
    └──────────────────┬────────────────────┘
                       │
                       ▼
        ┌──────────────────────────────┐
        │   Correct pixel output value │ ～S1603
        └──────────────┬───────────────┘
                       │
                       ▼
                  ┌─────────┐
                  │   END   │
                  └─────────┘
```

Fig. 17

Fig 18

Embodiment of correcting
apparatus for multi-segment CCD

Light receiving element and
vertical transferring CCD

1813

Non-volatile memory

L-horizontal
transferring CCD

R-horizontal
transferring CCD

1804

1812

Control micro-computer

1803

Detecting circuit
for carrier
component
(color component)

Gain
correction
circuit

Re-arranging
circuit for pixel

2-blocks
CDS/ADC

Gain
detecting
circuit

CCD signal
processing circuit

YCrCb signal

1805

1806

1811

1809

1810  1800

Fig. 19

EP 1 835 765 A1

From control micro-computer

1902

1904

1906

From gain
detecting circuit
(output from right
block of CCD)

Detecting circuit
for carrier
component

1901

Gain
correction
circuit

Correcting circuit
by means of standard
correction
approximate
straight-line
group information

Calculating
circuit for
correction
value by
means of ratio
of carrier
components

To re-arranging
circuit for pixel

Selecting circuit
for correction
approximate
straight-line group
information

Correcting circuit by
means of correction
approximate
straight-line group
information of large
carrier components

1903

1905

Fig 20

| (Mg) | (G) | (Mg) | (G) | | | |
|------|-----|------|-----|---|---|---|
| (Ye) | (Cy) | (Ye) | (Cy) | | | |
| (Mg) | (G) | (Mg) | (G) | | | |
| (Ye) | (Cy) | (Ye) | (Cy) | | | |
| | | | | | | |

Fig 21

| Mg + Ye (C1) | G + Cy (C2) | Mg + Ye (C1) | G + Cy (C2) | |
|---|---|---|---|---|
| G + Ye (C4) | Mg + Cy (C3) | G + Ye (C4) | Mg + Cy (C3) | |
| | | | | |

Fig. 22

Right-and-left gain difference

Corrected value calculated
according to ratio of
carrier components

2203

2201

2202

Standard correction
approximate straight-line
group information
(white in normal case)

Pixel output value

Inputted pixel output value

Correction approximate straight-line
group information of color having large carrier
components (red, green and blue in normal case)
(Note: although a plurality of correction
approximate straight-line group information exist,
only one of them is indicated.)

Fig 23

Fig. 24

Fig. 25

2501

```
┌─────────────────────────────────────────────────────────┐
│   ┌─────────────────────────────────────────────┐       │
│   │  Second storing unit for correction          │       │
│   │  approximate straight-line group information  │       │
│   └─────────────────────────────────────────────┘       │
│                                                           │
│       ┌─────────────────────────────────────────┐        │
│       │  Storing unit for error correction       │        │
│ 2502  │  approximate straight-line group information │     │
│       └─────────────────────────────────────────┘        │
│                                                           │
│        ┌──────────────────────────────────┐              │
│ 2503   │  Acquiring unit for pixel output value │         │
│        └──────────────────────────────────┘              │
│                                                           │
│                   ┌──────────────────────────┐           │
│ 2504              │   Second selecting unit    │          │
│                   └──────────────────────────┘           │
│                                                           │
│        ┌──────────────────────────────────┐              │
│        │  ┌────────────────────────────┐  │              │
│ 2506   │  │  Second correcting means    │  │              │
│        │  │  according to output ratio   │  │              │
│        │  └────────────────────────────┘  │              │
│        │     Second correcting unit        │              │
│ 2505   └──────────────────────────────────┘              │
│                                                           │
│         Correcting apparatus for multi-segment CCD       │
└─────────────────────────────────────────────────────────┘
```

2500

Fig 26

EP 1 835 765 A1

59

From control micro-computer

2602

2601

2604

From gain
detecting circuit
(output from right
block of CCD)

| Detecting circuit
for carrier
component |

Gain
correction
circuit

| Correcting circuit by
means of standard
correction approximate
straight-line
group information |

Re-arranging
circuit for pixel

| Selecting circuit
for error correction
approximate
straight-line
group information |

| Correcting circuit
by means of
error correction
approximate
straight-line
group information |

| Calculating circuit
for error correction
amount by means of
ratio of carrier
components |

2603

2605

2606

Fig. 27

Error correction approximate
straight-line group information

Error correction approximate
straight-line group information
of color having large carrier
components (red, green and
blue in normal case)
(Note: although a plurality of
correction approximate straight-line
group information exist,
only one of them is indicated.)

2701

Error difference from standard correction signal

Inputted pixel output value

Pixel output value

Fig. 28

From gain detecting circuit (output from right block of CCD)

Detecting circuit for carrier component

2801

Gain correction circuit

2802

From control micro-computer

Correcting circuit by means of standard correction approximate straight-line group information

2804

Selecting circuit for error correction approximate straight-line group information

2803

Correcting circuit by means of error correction approximate straight-line group information

2805

2806

Calculating circuit for error correction amount by means of ratio of carrier components

Non-linear converting circuit for correction ratio

2807

Re-arranging circuit for pixel

Fig. 29

2901

First storing unit for correction
approximate straight-line group information

2902
Acquiring unit for pixel output value

2906
Partial bypass processing unit

2903
First selecting unit

2905
First correcting means
according to output ratio

2904
First correcting unit

Correcting apparatus for multi-segment CCD

2900

Fig. 30

From control micro-computer

Gain correction circuit — 3002

From gain detecting circuit (output from right block of CCD)

Detecting circuit for carrier component — 3001

Selecting circuit for correction approximate straight-line group information — 3003

Correcting circuit by means of standard correction approximate straight-line group information — 3004

Correcting circuit by means of correction approximate straight-line group information of large carrier components — 3005

Calculating circuit for correction value by means of ratio of carrier components — 3006

Partial bypass processing unit — 3007

Re-arranging circuit for pixel

Fig. 31

START

Acquire pixel output value ⌇ S3101

Pixel
output value is less
than predetermined value? ⌇ S3102

No

S3104

Select more than two sets of
correction approximate straight-line
group information

Carry out correction
by means of first correcting
means according to output ratio

S3105

Yes

Carry out correction without
by means of first correcting
means according to output ratio ⌇ S3103

END

Fig. 32

3201

First storing unit for correction
approximate straight-line group information

3202 — Acquiring unit for pixel output value

3205 — Storing unit for standard correction
approximate straight-line group information

First selecting unit

3203 —

3204 — First correcting unit

Correcting apparatus for multi-segment CCD

3200

Fig 33

START

Acquire pixel output value — S3301

Pixel output value is less than predetermined value? — S3302

No

S3304

Select more than two sets of correction approximate straight-line group information

Carry out correction by means of more than two sets of correction approximate straight-line group information

S3305

Yes

Carry out correction by means of standard correction approximate straight-line group information — S3303

END

Fig. 34

3401

┌─────────────────────────────────────────────────┐
│  ┌───────────────────────────────────────────┐  │
│  │     Second storing unit for correction    │  │
│  │  approximate straight-line group information │  │
│  └───────────────────────────────────────────┘  │
│       ┌──────────────────────────────────────┐  │
│  3402 │       Storing unit for error correction │  │
│       │ approximate straight-line group information │  │
│       └──────────────────────────────────────┘  │
│       ┌──────────────────────────────────────┐  │
│  3403 │  Acquiring unit for pixel output value │  │
│       └──────────────────────────────────────┘  │
│       ┌──────────────────────────────────────┐  │
│  3407 │  Partial bypass processing unit        │  │
│       └──────────────────────────────────────┘  │
│                    ┌─────────────────────────┐  │
│  3404              │   Second selecting unit  │  │
│                    └─────────────────────────┘  │
│       ┌──────────────────────────────────────┐  │
│  3406 │    Second correcting means            │  │
│       │    according to output ratio          │  │
│  3405 │    Second correcting unit             │  │
│       └──────────────────────────────────────┘  │
│       Correcting apparatus for multi-segment CCD  │
└─────────────────────────────────────────────────┘

3400

Fig 35

EP 1 835 765 A1

From control micro-computer

3502

3501                                                        3504

From gain
detecting circuit
(output from right
block of CCD)

Detecting circuit
for carrier
component

Gain
correction
circuit

Correcting circuit by
means of standard
correction approximate
straight-line
group information

Re-arranging
circuit for pixel

Partial bypass
processing
unit

Selecting circuit
for error correction
approximate
straight-line
group information

Correcting circuit
by means of
error correction
approximate
straight-line
group information

Calculating circuit
for error correction
amount by means of
ratio of carrier
components

3507                    3503                    3505                    3506

Fig. 36

```
                                    ┌─────────────┐
                                    │    START    │
                                    └──────┬──────┘
                                           │
                                           ▼
                            ┌──────────────────────────────┐
                            │   Acquire pixel output value  │──── S3601
                            └───────────────┬───────────────┘
                                            │
                                            ▼
                                       Pixel
                    No          output value is less              S3602
               ◄──────────     than predetermined value?
                                            │
                                            │ Yes
                                            ▼
```

S3604

| Select correction approximate straight-line group information and error correction approximate straight-line group information |

| Carry out correction by means of second correcting means according to output ratio | | Carry out correction without by means of second correcting means according to output ratio |

S3603

S3605

```
                            ┌─────────────┐
                            │     END     │
                            └─────────────┘
```

Fig. 37

3701

First storing unit for correction
approximate straight-line group information

3705 — First gain amplifying unit

3702 — Acquiring unit for pixel output value

First selecting unit ~ 3703

3704 — First correcting unit

3706 — First gain attenuating unit

Correcting apparatus for multi-segment CCD

3700

Fig 38

EP 1 835 765 A1

Embodiment of correcting apparatus for multi-segment CCD

Light receiving element and vertical transferring CCD

L-horizontal transferring CCD | R-horizontal transferring CCD

2-blocks CDS/ADC

AGC1

Gain detecting circuit

Detecting circuit for carrier component (color component)

Non-volatile memory

Control micro-computer

Gain correction circuit

Re-arranging circuit for pixel

AGC2

CCD signal processing circuit → YCrCb signal

3802  3801  3804  3812  3808  3807
3813
3803  3805  3814  3806  3811  3809  3810  3815  3800

Fig. 39

START

Amplify pixel output value — S3901

Acquire pixel output value — S3902

Select more than two sets of correction approximate straight-line group information — S3903

Correct pixel output value — S3904

Attenuate corrected pixel output value — S3905

END

Fig. 40

4001

Second storing unit for correction approximate straight-line group information

4002 — Storing unit for error correction approximate straight-line group information

4006 — Second gain amplifying unit

4003 — Acquiring unit for pixel output value

4004 — Second selecting unit

4005 — Second correcting unit

4007 — Second gain attenuating unit

Correcting apparatus for multi-segment CCD

4000

Fig 41

```
        ( START )
            │
            ▼
┌───────────────────────┐
│ Amplify pixel output value │──── S4101
└───────────────────────┘
            │
            ▼
┌───────────────────────┐
│ Acquire pixel output value │──── S4102
└───────────────────────┘
            │                    S4103
            ▼
┌─────────────────────────────────────┐
│ Select correction approximate straight-line group │
│ information and error correction approximate │
│ straight-line group information │
└─────────────────────────────────────┘
            │
            ▼
┌───────────────────────┐
│ Correct pixel output value │──── S4104
└───────────────────────┘
            │
            ▼
┌─────────────────────────────┐
│ Attenuate corrected pixel output value │──── S4105
└─────────────────────────────┘
            │
            ▼
        ( END )
```

Fig 42

EP 1 835 765 A1

Fig. 43

Pixel A
(Pixel output value a)
(Type of pixel C1)
4303

Pixel B
(Pixel output value b)
(Type of pixel C1)
4304

| | | | | | | | | | | | | |
|---|---|---|---|---|---|---|---|---|---|---|---|---|
| | | | | | | | | | | | | |
| | | | | | A | | | B | | | |
| | | | | | | | | | | | | |
| | | | | | | | | | | | | |

L－ＣＣＤ
4301

R－ＣＣＤ
4302

2-segment CCD
4300

Fig. 44

Correction approximate straight-line group information

K

K1

a1

Pixel output value

Fig. 45

Correction approximate straight-line group information f1

Correction approximate straight-line group information f2

Correction approximate straight-line group information f3

K

Pixel output value

Fig 46

| CCD pixel number | Pixel type | Pixel output value | Correction approximate straight-line group information to be used | Correction value | Corrected value |
|---|---|---|---|---|---|
| ⋮ | | | | | |
| 10000 | C1 | a1 | f1 | +K1 | a1+K1 |
| 10001 | C2 | a2 | f2 | +K2 | a2+K2 |
| 10002 | C3 | a3 | f3 | +K3 | a3+K3 |
| 10003 | C4 | a4 | f4 | +K4 | a4+K4 |
| 10004 | C1 | a5 | f1 | +K5 | a5+K5 |
| 10005 | C2 | a6 | f2 | +K6 | a6+K6 |
| ⋮ | | | | | |

Fig. 47

Fig. 48

Gain difference G between standard
correction approximate straight-line group information (of white)
and correction approximate straight-line group information of red

Gain difference from right-block

Correction
approximate
straight-line group
information of white

Correction
approximate
straight-line group
information of red

L

Pixel output value

Error difference from standard correction
G approximate straight-line group information (of white)

Error correction approximate
straight-line group
information of red

L

Pixel output value

Fig 49

Pixel E
(Pixel output value e)
(Type of pixel A2)

Pixel D
(Pixel output value d)
(Type of pixel A1)

Pixel F
(Pixel output value f)
(Type of pixel A1)

Pixel C
(Pixel output value c)
(Type of pixel A2)

Pixel B
(Pixel output value b)
(Type of pixel A1)

Right-block

Pixel A
(Pixel output value a)
(Type of pixel A1)

Left-block

2-segment CCD

Fig 50

Vertical transferring unit
5002

Unit of complementary color filter
5005

Light receiving unit
5001

| (Mg) | (G) | (Mg) | (G) |
| (Ye) | (Cy) | (Ye) | (Cy) |
| (Mg) | (G) | (Mg) | (G) |
| (Ye) | (Cy) | (Ye) | (Cy) |

Initial one line
5004

Horizontal transferring unit
5003

CCD
5000

## INTERNATIONAL SEARCH REPORT

| International application No. |
|---|
| PCT/JP2005/013133 |

A. CLASSIFICATION OF SUBJECT MATTER
*H04N9/07*(2006.01), *H04N5/335*(2006.01)

According to International Patent Classification (IPC) or to both national classification and IPC

B. FIELDS SEARCHED

Minimum documentation searched (classification system followed by classification symbols)
*H04N9/04-9/11*(2006.01), *H04N5/335*(2006.01)

Documentation searched other than minimum documentation to the extent that such documents are included in the fields searched
Jitsuyo Shinan Koho        1922-1996   Jitsuyo Shinan Toroku Koho   1996-2005
Kokai Jitsuyo Shinan Koho  1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-320142 A (Sony Corp.), 31 October, 2002 (31.10.02), Full text; all drawings (Family: none) | 1-22 |
| A | JP 2002-185971 A (Nikon Corp.), 28 June, 2002 (28.06.02), Full text; all drawings (Family: none) | 1-22 |
| A | JP 2003-9162 A (Nippon Hoso Kyokai), 10 January, 2003 (10.01.03), Full text; all drawings (Family: none) | 1-22 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 17 October, 2005 (17.10.05) | Date of mailing of the international search report 25 October, 2005 (25.10.05) |
|---|---|
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/013133 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-101851 A  (Canon Inc.), 04 April, 2003 (04.04.03), Full text; all drawings (Family: none) | 1-22 |
| P,A | JP 2004-350202 A  (Canon Inc.), 09 December, 2004 (09.12.04), Full text; all drawings (Family: none) | 1-22 |
| P,A | JP 2004-357238 A  (Canon Inc.), 16 December, 2004 (16.12.04), Full text; all drawings (Family: none) | 1-22 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2002320142 A